# EUROPÄISCHE PATENTSCHRIFT

(11) **EP 3 671 309 B1**
(45) Veröffentlichungstag und Bekanntmachung des Hinweises auf die Patenterteilung: **10.11.2021**
(21) Anmeldenummer: 18214781.9
(22) Anmeldetag: 20.12.2018
(51) Int. Cl.: G02B 21/24, G02B 21/36, G02B 21/16

(54) **VERFAHREN UND MIKROSKOPIERSYSTEM ZUM AUFNEHMEN EINES MIKROSKOPISCHEN FLUORESZENZBILDES EINES PROBENBEREICHES MIT EINER BIOLOGISCHEN PROBE**
METHOD AND MICROSCOPY SYSTEM FOR HOLDING A MICROSCOPIC FLUORESCENCE IMAGE OF A SAMPLE REGION WITH A BIOLOGICAL SAMPLE
PROCÉDÉ ET SYSTÈME DE MICROSCOPIE PERMETTANT DE RECEVOIR UNE IMAGE MICROSCOPIQUE DE FLUORESCENCE D'UNE ZONE D'ÉCHANTILLON DOTÉE D'UN ÉCHANTILLON BIOLOGIQUE

(43) Veröffentlichungstag der Anmeldung: 24.06.2020
(73) Patentinhaber: Euroimmun Medizinische Labordiagnostika AG, 23560 Lübeck (DE)
(72) Erfinder: HAGEN-EGGERT, Martin, 23552 Lübeck (DE); SUMPF, Tilman, 23552 Lübeck (DE)

(56) Entgegenhaltungen:
- EP-A1- 3 369 405
- WO-A1-2016/022359
- US-A1- 2008 251 694
- US-A1- 2011 270 092
- US-A1- 2015 381 909

## Beschreibung

Aus dem Stand der Technik sind Verfahren sowie Vorrichtungen bekannt, bei welchen mittels eines Laserstrahls eine Fokussierung für eine Kamera bzw. einen Bildsensor bezogen auf einen Probenbereich mit einer biologischen Probe vorgenommen wird und wobei dann ein Fluoreszenzbild des Probenbereiches erfasst wird.

Insbesondere ist ein Verfahren bekannt, bei welchem mit einem Laserstrahl mit einer Wellenlänge von beispielsweise 635 nm eine Reflexion in einem sogenannten Rotkanal mit einer ersten Kamera bzw. einem ersten Bildsensor erfasst wird, um eine optimale Ausrichtung bzw. einen optimalen Abstand des Probenbereiches zu einem Objektiv des Mikroskopes zum Zwecke einer Fokussierung vorzunehmen. Es wird dann mit einer weiteren Kamera in einem Grünkanal ein Fluoreszenzbild des Probenbereiches mit der biologischen Probe erfasst. Hierbei können also grüne Fluoreszenzbilder in einem Grünkanal erfasst werden, welcher keine Rotanteile aufweist.

Die DE102008015885A1 beschreibt ein Verfahren zur Autofokussierung von optischen Geräten, wobei hierzu Bilder mit konzentrischen Ringen aufgenommen werden, deren Durchmesser sich in Abhängigkeit von einem Abstand der zu bestimmenden Fokusposition verändert.

Die WO2016/133787A1 offenbart ein Verfahren und ein System zum automatischen Fokussieren eines Mikroskops, wobei ein Peak-Wert eines reflektierten Laserstrahls als Indiz für einen Grad einer Fokussierung des Systems verwendet wird.

Die WO2016022359 A1 offenbart die Verwendung einer monochromen CCD oder CMOS Kamera, sowohl zur Aufnahme von Fluoreszenzbildern, als auch zur Erfassung von reflektiertem Laserlicht zur Fokusbestimmung.

Aufgabe der vorliegenden Erfindung ist es, ein System und ein Verfahren zum Aufnehmen eines mikroskopischen Fluoreszenzbildes mit automatischer Fokussierung bereitzustellen, welches besonders leistungsstark ist.

Ein Verfahren gemäß der vorliegenden Erfindung ist in Anspruch 1 definiert, ein entsprechendes Mikroskopiersystem in Anspruch 14.

Die erfindungsgemäße Aufgabe wird gelöst durch das vorgeschlagene Verfahren zum Aufnehmen eines mikroskopischen Fluoreszenzbildes eines Probenbereiches mit einer biologischen Probe. Ein Laserstrahl wird mittels wenigstens eines Objektivs auf den Probenbereich gerichtet, welcher mindestens eine Grenzfläche aufweist, wobei das Objektiv eine Fokussierung des Laserstrahls in einer Fokussierungsebene bewirkt. Ein Relativabstand zwischen dem Objektiv und dem Probenbereich wird entlang einer optischen Achse des Objektivs geändert, um jeweilige, unterschiedliche Relativabstände zu bewirken. Für einen jeweiligen Relativabstand erfolgt hierbei ein Erfassen einer jeweiligen Menge von Pixelintensitätswerten, welche durch den an der Grenzfläche reflektierten und durch das Objektiv zurücktransmittierten Laserstrahl auf korrespondierenden Sensorpixeln eines Bildsensors bewirkt werden. Ferner erfolgt für einen jeweiligen Relativabstand ein Bestimmen einer jeweiligen Fokusmetrik auf Basis der für den jeweiligen Relativabstand erfassten jeweiligen Menge von Pixelintensitätswerten. Es erfolgt ferner ein Ermitteln eines bevorzugten Relativabstandes auf Basis der ermittelten Fokusmetriken. Schließlich erfolgt ein Einstellen des bevorzugten Relativabstandes, ein Beleuchten des Probenbereiches mit einer Anregungsstrahlung sowie ein Erfassen des mikroskopischen Fluoreszenzbildes mittels des Bildsensors, insbesondere an dem bevorzugten Relativabstand bzw. bei Einstellung eines bevorzugten Relativabstandes.

Das erfindungsgemäße Verfahren ist dadurch gekennzeichnet, dass der Bildsensor ein Photosensor mit einer vorgeschalteten Farb-Filter-Matrix ist, wobei ferner das mikroskopische Fluoreszenzbild ein Farbbild ist, insbesondere ein nicht-monochromes Farbbild, und wobei der Laserstrahl eine Wellenlänge im Nah-Infrarot-Bereich aufweist.

Das vorgeschlagene, erfindungsgemäße Verfahren erlaubt es, ein Fluoreszenzbild des Probenbereiches als ein Farbbild zu erfassen, wobei nur ein einziger Bildsensor für die Erfassung des Farbildes und für den Vorgang der Fokussierung verwendet werden muss, da dem Bildsensor eine Farb-Filter-Matrix vorgeschaltet ist. Dieser Bildsensor mit der dem Bildsensor vorgeschalteten Farb-Filter-Matrix kann eben auch gleichzeitig zur Erfassung von Pixelintensitätswerten während der Fokussierung verwendet werden, da der Laser eine Wellenlänge im Nah-Infrarot-Bereich aufweist.

Der Nah-Infrarot-Bereich ist ein für den Menschen nicht sichtbarer Infrarotbereich und ist ein Wellenlängenbereich, in welchem sich ein besonderes Zusammenwirken der Farb-Filter-Matrix mit dem Laserstrahl ergibt, wie im Folgenden genauer erläutert.

Gemäß dem Stand der Technik ist es üblich, einen Laser mit einer Wellenlänge von beispielsweise 635 nm in einem separaten Rotkanal mit einem separaten Bildsensor bzw. Kamera und einem separaten optischen Farbfilter zu erfassen. Würde ein Laserstrahl mit einer Wellenlänge von 635 nm in Kombination mit dem einem Bildsensor bzw. Photosensor in Kombination mit einer Farb-Filter-Matrix für den Vorgang der Fokussierung verwendet werden, so kann nicht unbedingt sichergestellt werden, dass der Laserstrahl auf Bereiche der Farb-Filter-Matrix trifft, welche für rotes Licht dieser Wellenlänge von 635 nm hinreichend transmissiv sind. Eine Farb-Filter-Matrix besteht üblicherweise aus unterschiedlichen Filterelement-Typen für unterschiedliche Farbkanäle, insbesondere zumindest der Typen Rotkanal und Grünkanal, besonders bevorzugt ferner auch des Typs Blaukanal. Die Farb-Filter-Matrix ist dann aufgebaut aus einer zweidimensionalen Anordnung einer Mehrzahl an Farbfilter-Elementen, wobei in einer Anordnungsrichtung unmittelbar zueinander benachbarte Farbfilter-Elemente jeweils von einem unterschiedlichen Filterelement-Typ sind. Daher kann bei einer Farb-Filter-Matrix nicht sichergestellt werden, dass der Laserstrahl auf ein Filterelement eines passenden Farbkanals bzw. des Rotkanals der Farb-Filter-Matrix trifft und dann hinreichend hin zum Bildsensor transmittiert wird. Daher wäre eine Verwendung eines solchen Lasers bei 630 nm in Kombination mit dem Bildsensor und der Farb-Filter-Matrix für die Fokussierung problematisch, da es zu einer unerwünschten Unterdrückung des Laserlichtes durch bestimmte Bereiche bzw. Filterelemente der Farb-Filter-Matrix kommen könnte.

Dadurch, dass erfindungsgemäß ein Laserstrahl in dem Nah-Infrarot-Bereich verwendet wird und dass der Bildsensor die vorgeschaltete Farb-Filter-Matrix besitzt, wird ein überraschender Effekt ausgenutzt: handelsübliche Farbfiltermatrizen können im Nah-Infrarot-Bereich an allen ihren Kanälen bzw. an allen ihren Teilbereichen unterschiedlicher Farbkanäle hinreichend transmissiv für Licht des Nah-Infrarot-Bereiches sein, insbesondere für eine Wellenlänge größer als 780, bevorzugt größer als 800 nm, besonders bevorzugt gleich oder größer als 850nm.

Hierdurch kann also sowohl zur Erfassung des Fluoreszenzbildes in Form eines Farbbildes als auch für die Fokussierung mittels des Laserstrahls der gleiche Bildsensor verwendet werden, obwohl dem Bildsensor die Farb-Filter-Matrix vorgeschaltet ist. Dadurch, dass das Fluoreszenzbild als ein Farbbild erfasst wird, ist es eben auch möglich, dass dem Nutzer ein Bild präsentiert werden kann, welches nicht nur Verfärbungen und/oder Fluoreszenz in einem alleinigen Grünkanal aufweist sondern auch Verfärbungen und/oder Fluoreszenz anderer Farbbereiche bzw. Farbkanäle wie z.B. einem Rotkanal. Fluoreszenzbilder von biologischen Proben wie beispielsweise biologischem Gewebe weisen nicht nur eine reine Grünfärbung aufgrund von Bindungen von Fluoreszenzfarbstoffen auf, sondern weisen ggf. ferner auch Eigenfärbungen auf, welche nicht nur in einem Grünbereich sondern auch beispielsweise in einem Orange- oder Braunbereich sichtbar sind, so dass Rotanteile zum Tragen kommen. Ferner kann Gewebe bzw. Organgewebe auch eine sogenannte Autofluoreszenz aufweisen, welche ebenso eher in einem Orangebereich oder Braunbereich für den Nutzer sichtbar ist. Der Nutzer, beispielsweise ein Arzt, möchte dann eine Befundung durchführen und ist es mitunter gewohnt, durch ein Okular eines Mikroskops zu blicken und eine Betrachtung des Fluoreszenzbildes ohne weitere Verfärbungen bzw. Farbkanalselektionen optisch wahrzunehmen, um dann eine Befundung durchzuführen. Würde, wie aus dem Stand der Technik bekannt, lediglich ein Grünkanal verwendet werden, so könnte der Nutzer eben bei einem solchen reinen Grünkanal-Fluoreszenzbild andere Farbanteile dann später bei der Wiedergabe des Fluoreszenzbildes nicht wahrnehmen. Daher wird eben in vorteilhafter Weise ein Verfahren bereitgestellt, bei welchem ein Bildsensor mit einer vorgeschalteten Farb-Filter-Matrix zur Gewinnung des Fluoreszenzbildes als ein Farbbild verwendet werden kann, wobei dieser Bildsensor mit der vorgeschalteten Farb-Filter-Matrix gleichzeitig auch für die Fokussierung anhand des Laserstrahls im Nah-Infrarot-Bereich verwendet werden kann. Es ist also keine weitere, zusätzliche bzw. separate Kamera bzw. Bildsensor für eine Detektion eines reflektierten Laserstrahls notwendig.

Vorteilhafte Ausführungsformen der Erfindung sind Gegenstand der abhängigen Ansprüche und werden in der folgenden Beschreibung unter teilweise Bezugnahme auf die Figuren näher erläutert.

Vorzugsweise ist das mikroskopische Fluoreszenzbild ein digitales Farbbild, insbesondere mit wenigstens einem Grünanteil und einem Rotanteil. Besonders bevorzugt weist das digitale Farbbild ferner einen Blauanteil auf. Derartige Farbanteile können durch ein digitales Farbbild repräsentiert sein, welches einer RGB-Farb-Kodierung entspricht. Alternativ ist es aber auch denkbar, dass das digitale Farbbild derartige Farbanteile in einer anderen Farbkodierung repräsentiert wie z.B. einer CMYK-Farbkodierung.

Gemäß der Erfindung ist die Farb-Filter-Matrix eine Matrix mit einer Mehrzahl an Farbkanälen, welche vorzugsweise wenigstens einen Grünkanal und einen Rotkanal aufweisen, besonders bevorzugt ferner auch einen Blaukanal. Besonders bevorzugt ist die Farb-Filter-Matrix eine RGB-Matrix.

Die Wellenlänge ist größer als 780 nm, bevorzugt größer als 800 nm. Die Wellenlänge liegt vorzugsweise in einem Bereich von 780 nm bis 1000 nm, bevorzugt in einem Bereich von 800 nm bis 1000 nm. In einer besonderen Ausführungsform beträgt die Wellenlänge 850 nm.

Die Farb-Filter-Matrix ist vorzugsweise eine Bayer-Matrix.

Der Photosensor ist vorzugsweise ein CMOS-Sensor oder ein CCD-Sensor.

Das Erfassen einer jeweiligen Menge von Pixelintensitätswerten für einen jeweiligen Relativabstand erfolgt mittels vorzugsweise mittels eines Erfassens jeweiliger Teilmengen von Pixelintensitätswerten jeweiliger Farbkanäle, wobei die jeweilige Menge von Pixelintensitätswerten auf Basis der jeweiligen Teilmenge von Pixelintensitätswerten ermittelt wird. Vorzugsweise werden hierbei Pixelintensitätswerte einer jeweiligen Teilmenge mit einem vorgegebenen Skalierungsfaktor gewichtet, welcher davon abhängt, zu welcher Art von Farbkanal die jeweilige Teilmenge von Pixelintensitätswerten gehört. Hierdurch lassen sich Transmissivitätsunterschiede der einzelnen Farbkanäle der Farb-Filter-Matrix ausgleichen.

Vorzugsweise weisen die jeweiligen Farbkanäle der Farb-Filter-Matrix an der Wellenlänge des Laserstrahls eine jeweilige Transmissivität auf, welche maximal um einen Faktor 5 voneinander abweichen. Hierdurch ist es möglich, eine die jeweilige Menge von Pixelintensitätswerte aus Pixelintensitäten der jeweiligen Farbkanälen mittels farbkanalabhängiger Skalierung der Pixelintensitätswerte zu bestimmten, wobei eben die Intensitätswerte der jeweiligen Farbkanäle nicht so weit voneinander abweichen, als dass eine Skalierung der jeweiligen Werte abhängig vom Typ des Farbkanals eine zu starke Verschlechterung bezogen auf ein Signal-Rausch-Verhältnis bewirken würde.

Der Laserstrahl ist vorzugsweise ein im Wesentlichen kollimiertes, paralleles Strahlenbündel.

Vorzugsweise ist in einen Detektionsstrahlengang zwischen dem Objektiv und dem Bildsensor eine Linse oder ein Linsensystem angeordnet, die bzw. das eine Brennebene des Objektivs auf dem Bildsensor abbildet.

Vorzugsweise erfolgt ein Bestimmen eines jeweils höchsten bzw. maximalen Pixelintensitätswertes als eine jeweilige Fokusmetrik für einen jeweiligen Relativabstand auf Basis der jeweiligen Menge von Pixelintensitätswerten. Ferner erfolgt vorzugsweise ein Bestimmen eines Verlaufs der höchsten Pixelintensitätswerte durch Zuordnen des jeweils höchsten Pixelintensitätswertes zu dem jeweiligen Relativabstand. Vorzugsweise erfolgt ein Bestimmen des bevorzugten Relativabstandes anhand mindestens eines Maximums des Verlaufs der höchsten Pixelintensitätswerte.

Vorzugsweise erfolgt ein Ändern des Relativabstandes mittels Verringern des Relativabstandes ausgehend von einem größten Abstand hin zu einem kleinsten Abstand unter Verwendung einer ersten Abstandsauflösung, sodass der Verlauf mehrere Maxima aufweist. Vorzugsweise erfolgt ein Bestimmen eines temporär bevorzugten Relativabstandes auf Basis der mehreren Maxima. Vorzugsweise erfolgt dann ein Vergrößern des Relativabstandes hin zu dem temporär bevorzugten Relativabstand unter Verwendung einer zweiten Abstandsauflösung, welche höher ist als die erste Abstandsauflösung, bei gleichzeitigem Erfassen von jeweiligen weiteren höchsten Pixelintensitätswerten als jeweilige Fokusmetriken an jeweiligen, weiteren Relativabständen. Vorzugsweise erfolgt ein Detektieren eines Vorliegens eines lokalen Maximums auf Basis der weiteren höchsten Pixelintensitätswerte und Bestimmen des bevorzugten, finalen Relativabstandes als der Relativabstand, bei welchem das lokale Maximum vorliegt.

Vorgeschlagen wird ferner ein Mikroskopiersystem zum Aufnehmen eines mikroskopischen Fluoreszenzbildes eines Probenbereiches mit einer biologischen Probe. Das Mikrokopiersystem weist eine Probenhalterung zum Halten des Probenbereiches auf, welcher mindestens eine Grenzfläche aufweist, ferner eine Laserquelle zum Erzeugen eines Laserstrahls, eine Anregungslichtquelle zum Aussenden von Anregungslicht auf den Probenbereich, wenigstens ein Objektiv, welches ausgebildet ist, den Laserstrahl auf den Probenbereich zu richten und ferner eine Fokussierung des Laserstrahls in einer Fokussierungsebene zu bewirken, sowie einen Bildsensor zum Erfassen einer Menge von Pixelintensitätswerten, welche durch den an der Grenzfläche reflektierten und durch das Objektiv zurücktransmittierten Laserstrahl auf korrespondierenden Sensorpixeln des Bildsensors bewirkt werden.

Das Objektiv und der Probenbereich sind entlang einer optischen Achse des Objektivs relativ zueinander verfahrbar, um einen Relativabstand zwischen Objektiv und Probenbereich zu verändern.

Das Mikroskopiersystem weist ferner einen Prozessor auf. Der Prozessor ist ausgebildet, das Objektiv und/oder die Probenhalterung derart anzusteuern dass das Objektiv und der Probenbereich jeweilige, unterschiedliche Relativabstände zueinander aufweisen. Der Prozessor ist ferner ausgebildet, für einen jeweiligen Relativabstand eine jeweilige Menge von Pixelintensitätswerten mittels des Bildsensors zu erfassen und ferner eine jeweilige Fokusmetrik auf Basis der jeweiligen Menge von Pixelintensitätswerten zu ermitteln. Der Prozessor ist ferner ausgebildet, auf Basis der ermittelten Fokusmetriken einen bevorzugten Relativabstand zu bestimmen. Der Prozessor ist ferner ausgebildet, das Objektiv und/oder die Probenhalterung derart anzusteuern, dass der bevorzugte Relativabstand eingestellt wird, ferner die Anregungslichtquelle zu aktivieren sowie mittels des Bildsensors das mikroskopische Fluoreszenzbild zu erfassen.

Das Mikroskopiersystem ist dadurch gekennzeichnet, dass der Bildsensor ein Photosensor mit einer vorgeschalteten Farb-Filter-Matrix ist, dass das mikroskopische Fluoreszenzbild ein Farbbild ist, insbesondere ein nicht-monochromes Farbbild, und dass der Laserstrahl eine Wellenlänge im Nah-Infrarot-Bereich aufweist.

Im Folgenden wird die Erfindung anhand spezieller Ausführungsformen ohne Beschränkung des allgemeinen Erfindungsgedankens anhand der Figuren näher erläutert. Dabei zeigen:
Figur 1 eine bevorzugte Ausführungsform eines vorgeschlagenen Mikroskopiersystems,
Figur 2 einen beispielhaften Probenbereich mit einer biologischen Probe,
Figur 3a einen Bildsensor,
Figur 3b eine Farb-Filter-Matrix,
Fig. 4a, 4b und 4c Beispiele von Pixelintensitäten eines Teilbereichs einer Detektionsfläche eines Bildsensors mit bei verschiedenen Relativabständen aufgenommenen Teilbildern,
Fig. 4d ein Beispiel einer vorbestimmten Fläche innerhalb des Teilbereichs,
Fig. 4e ein Beispiel von Pixelintensitäten eines Bildsensors während einer Fokussierung,
Fig. 5 einen Verlauf von höchsten Intensitätswerten in Abhängigkeit eines Relativabstandes,
Fig. 6 zeigt ein weiteres Beispiel eines lokalen Maximums in einem Verlauf von Maximalwerten in Abhängigkeit von einem Relativabstand, wie gemäß einer Ausführungsform des Verfahrens bestimmt;
Figuren 7a und 7b mittels eines Bildsensors erfasste Pixelbilder eines reflektierten Laserstrahls bei Verwendung einer Wellenlänge im Nah-Infrarot-Bereich,
Figuren 7c und 7d sich ergebende Pixelbilder bei Erfassung eines reflektierten Laserstrahls mit einer Wellenlänge von 650 nm bei Verwendung eines Bildsensors mit vorgeschalteter Farb-Filter-Matrix,
Figur 8 eine Transmissivität unterschiedlicher Farbkanäle einer beispielhaften Farb-Filter-Matrix,
Figur 9 ein beispielhaftes Fluoreszenzbild eines Gewebes als ein Grauwertbild, wobei die Intensitäten des Grauwertbildes auf Intensitäten aus mehreren Farbkanälen basieren,
Figur 10 das beispielhafte Fluoreszenzbild mit Kennzeichnung zweier Gewebestrukturen,
Figur 11 ein reiner Grünanteil des Fluoreszenzbildes mit Kennzeichnung der zwei Gewebestrukturen,
Figur 12 ein reiner Rotanteil des Fluoreszenzbildes mit Kennzeichnung der zwei Gewebestrukturen,
Fig. 13 ein Ablaufdiagramm zur Durchführung von Verfahrensschritten gemäß einer bevorzugten Ausführungsform.

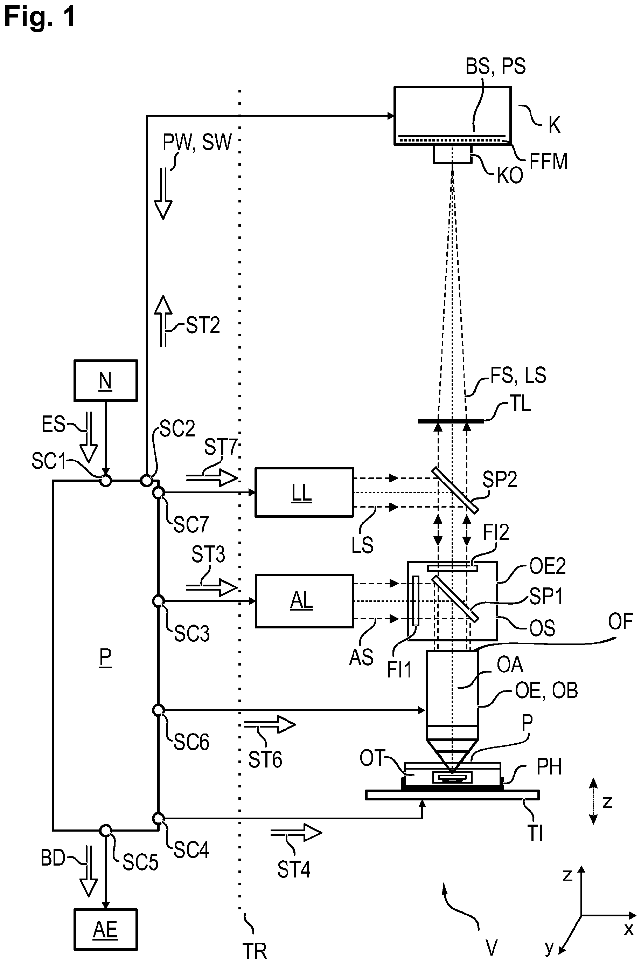

Die Figur 1 zeigt ein Mikroskopiersystem bzw. eine Vorrichtung V, bei welcher ein Probenbereich P auf einem Objektträger OT bereitgestellt wird. Der Probenbereich P weist eine biologische Probe auf. Der Probenbereich P wird in einer Probenhalterung PH gehalten, welche vorzugsweise auf einem in z-Richtung bzw. in seiner Höhe verfahrbaren Tisch TI angebracht ist. Der Tisch TI und die Probenhalterung PH können als eine kombinierte Einheit bzw. eine kombinierte Probenhalterung PH, TI angesehen werden.

Die Probenhalterung PH ist in einer Z-Richtung hin zu einem Objektiv OB verfahrbar entlang einer optischen Achse OA des Objektivs. Das Objektiv OB kann auch als eine optische Einheit OE bezeichnet werden.

In diesem hier dargestellten Beispiel ist die Probenhalterung PH, TI verfahrbar gegenüber dem Objektiv OB. Alternativ kann auch das Objektiv OB gegenüber der Probenhalterung PH, TI verfahrbar sein. Die Verfahrbarkeit bezieht sich auf die Einstellung eines Relativabstandes zwischen Probenbereich P und Objektiv OB. Mit anderen Worten: das Objektiv OB und Probenbereich P bzw. die Probenhalterung PH, TI sind entlang der optischen Achse OA des Objektivs OB relativ zueinander verfahrbar, um einen Relativabstand zwischen Objektiv OB und Probenbereich P zu verändern.

Der Probenbereich P weist wenigstens eine Grenzfläche auf.

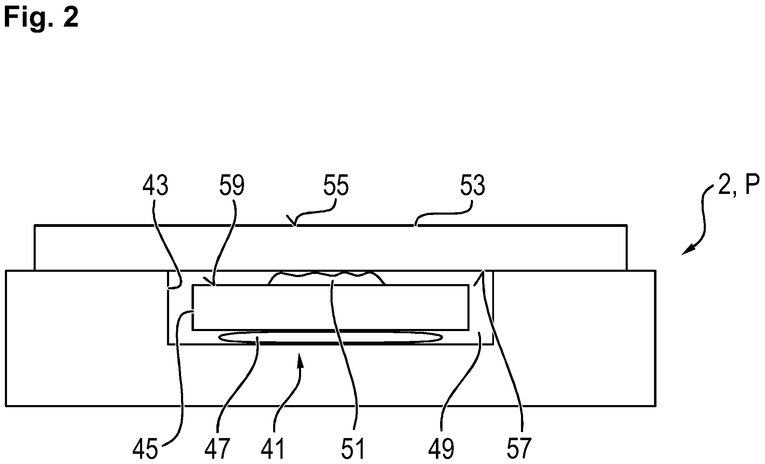

Die Figur 2 zeigt den Probenbereich 2, P im Detail. Der Probenbereich 2 umfasst einen Objektträger mit eingebettetem Biochip, wie in größerem Detail in einer schematischen Seitenschnittansicht in Fig. 2 illustriert ist. Der Probenbereich 2 umfasst einen Objektträger 41, der eine plattenförmige Struktur mit einer Aussparung 43 hat. In der Aussparung 43 des Objektträgers 41 ist ein Biochip 45 angeordnet und mittels eines Klebers 47 an dem Objektträger 41 angebracht. Um den Biochip 45 herum ist innerhalb der Aussparung 43 Glycerin 49 eingefüllt. Auf dem Biochip 45 ist eine (biologische) Probe 51 aufgebracht. Die Probe 51 ist somit in das Glycerin 49 eingebettet. Ein Deckglas 53 deckt die Aussparung 43 mit der darin befindlichen Probe 51 umgeben mit Glycerin 49 ab. Das Deckglas 53 hat eine obere Oberfläche 55, welche eine erste Grenzfläche bildet, und eine untere Oberfläche 57, welche eine zweite Grenzfläche bildet. Die Oberfläche 59 des Biochips 45 bildet eine dritte Grenzfläche. Insbesondere wird diese dritte Grenzfläche 59 in einem Verfahren zur Fokussierung gemäß einer Ausführungsform der vorliegenden Erfindung bestimmt.

Der bevorzugte Relativabstand (relativer vertikaler Abstand zwischen dem Objektiv und dem Probenbereich) ist eingenommen, wenn der Laserstrahl von dem Objektiv auf die Oberfläche 59 (das heißt die dritte Grenzfläche) des Biochips 45 fokussiert ist. Sobald dieser bevorzugte Relativabstand aufgefunden ist, kann ein oder können mehrere Bilder durch Auslesen der vorzugsweise gesamten Detektionsfläche des Bildsensors aufgenommen werden, insbesondere wenn die Probe 51 zum Beispiel mit fluoreszenzanregendem Licht beleuchtet wird.

Bei dem Probenbereich kann es sich um einen in drei Dimensionen ausgedehnten Probenbereich handeln, welcher somit in zwei lateralen Richtungen ausgedehnt ist sowie in einer dazu senkrechten Tiefenrichtung ausgedehnt ist. Insbesondere kann innerhalb des Probenbereichs in einer bestimmten Tiefe eine (biologische) Probe befindlich sein, von welcher ein fokussiertes Bild, insbesondere Fluoreszenzbild, aufzunehmen ist. Das Verfahren (und das Mikroskopiesystem) kann somit insbesondere in der Autoimmundiagnostik zur Evaluierung von Immunfluoreszenz-Präparaten eingesetzt werden. Insbesondere können das Verfahren und das Mikroskopiesystem einen indirekten Immunfluoreszenz-Test (IIFT) unterstützen. Das Verfahren kann eine rasche Abarbeitung der zu befundenen Proben sicherstellen, was eine schnelle Fokussierung der Proben erfordert.

Die mindestens eine Grenzfläche kann zum Beispiel eine ebene Grenzfläche sein, zum Beispiel zwischen einem festen Material und Luft, zwischen einem festen Material und einer Flüssigkeit oder zwischen einem festen Material und einer (organischen) Probe. Das Vorhandensein der mindestens einen Grenzfläche kann eine Fokussierung erleichtern bzw. eine Zuverlässigkeit der Fokussierung erhöhen.

Gemäß einer Ausführungsform der vorliegenden Erfindung ist das Verfahren derart ausgebildet, dass mindestens eine Grenzfläche, insbesondere zwei Grenzflächen, nicht an Luft angrenzt, wobei der Probenbereich insbesondere eine organische Probe umfasst, die auf einem Biochip aufliegt, in einer flüssigen Substanz eingebettet ist und von einem Deckglas abgedeckt ist, wobei ferner insbesondere die Oberseite des Deckglases eine erste Grenzfläche bildet, wobei die Unterseite des Deckglases eine zweite Grenzfläche bildet, und wobei die Oberfläche des Biochips eine dritte Grenzfläche bildet. Die organische Probe kann zum Beispiel eine histologische Probe umfassen, welche beispielsweise angefärbt ist und/oder mit einem oder mehreren Fluoreszenzmarker(n) oder Fluoreszenzmolekül(en) versetzt wurde. Die Fluoreszenzmarker oder Fluoreszenzmoleküle können an vorbestimmten Stellen oder Rezeptoren oder Antigenen an der organischen Probe gebunden sein. Die flüssige Substanz kann zum Beispiel Glycerin umfassen. Die organische Probe kann zum Beispiel eine nasse organische Probe sein, wobei verhindert sein kann, dass die Probe austrocknet. Ausführungsformen der Erfindung ermöglichen, eine in eine Flüssigkeit (dreidimensional, d.h. Im Wesentlichen von allen Seiten) eingebettete organische Probe abzubilden. Die Grenzflächen können durch eine Änderung des Brechungsindexes oberhalb und unterhalb der Grenzfläche charakterisiert sein. Zum Beispiel kann sich beim Übergang an der Grenzfläche zwischen einem flüssigen Medium und einem festen Medium der Brechungsindex weniger stark ändern als bei einem Übergang an einer Grenzfläche von Luft zu einem festen Medium, zum Beispiel Glas. Der Reflexionsgrad an der Grenzfläche kann umso geringer sein, je geringer die Änderung des Brechungsindex an der Grenzfläche ist. Trotz einer relativ geringen Reflexion an der dritten Grenzfläche kann diese durch das erfindungsgemäße Verfahren detektiert werden.

Gemäß der Figur 1 weist die Vorrichtung V eine Laserlichtquelle bzw. Laserquelle LL auf, welche ein Laserlicht bzw. einen Laserstrahl LS erzeugt. Der Laserstrahl LS wird über einen Strahlteiler SP2 in Richtung des Objektivs OB gelenkt und tritt in eine optische Öffnung OF des Objektivs OB ein. Der Laserstrahl ist insbesondere ein im Wesentlichen kollimiertes, paralleles Strahlenbündel. Der Strahlteiler SP2 ist insbesondere ein Strahlteiler, welcher einen ersten Leistungsanteil eines einfallenden Lichtes reflektiert und einen zweiten Leistungsanteil des einfallenden Lichtes transmittiert.

Laserlicht, welches an einer Grenzfläche des Probenbereiches P zurückreflektiert wird, wird dann durch das Objektiv OB durch einen dichroitischen Strahlteiler SP1 und ein optisches Filter FI2 und den Strahlteiler SP2 hin zu einer Linse bzw. Tubuslinse TL reflektiert. Die Tubuslinse TL zusammen mit dem Objektiv bewirkt eine Abbildung des Laserstrahls auf einen Bildsensor BS, welcher insbesondere ein Photosensor PS ist. Dem Bildsensor BS ist eine Farb-Filter-Matrix FFM vorgeschaltet. Der Bildsensor BS und die Farb-Filter-Matrix FFM sind vorzugsweise Bestandteil einer Kamera K, welche vorzugsweise eine Kameraoptik KO aufweist.

Das Objektiv OB ist so ausgebildet, dass es Laserstrahlen, welche parallel zueinander als ein paralleler Strahlengang bzw. ein kollimiertes, paralleles Strahlenbündel in seine der Laserlichtquelle LL zugewandten optische Öffnung OF hineintreten, auf einen Punkt einer Brennebene des Objektivs auf der anderen Seite des Objektivs projiziert, wobei der Punkt der Brennpunkt sein kann oder ein zu dem Brennpunkt in der Brennebene versetzter Punkt, falls das Strahlenbündel nicht genau parallel zur optischen Achse des Objektivs verläuft. Laserstrahlen, welche von genau diesem Punkt, insbesondere dem Brennpunkt, in der Brennebene reflektiert werden und von dorther zurück in das Objektiv eintreten, werden wiederum auf der Öffnungsseite bzw. der optischen Seite OF hin zu dem Bildsensor BS zu einem parallelen Strahlengang geformt.

Ist also zum Beispiel der Laserstrahl LS ein kollimiertes, paralleles Strahlenbündel, so erzeugt das Objektiv OB eine Projektion des Laserstrahls in seiner gesamten Intensität auf den einen Punkt, insbesondere den Brennpunkt, in der Brennebene des Objektivs. Der durch das Objektiv von diesem Punkt, insbesondere diesem Brennpunkt, her aufgefangene Strahlengang, welcher auf der anderen Seite des Objektives zu einem parallelen, kollimierten Strahlengang gebündelt wird, kann dann mittels einer dem Objektiv OB nachgeschalteten Linse TL, vorzugsweise einer Tubuslinse, auf einen Abbildungspunkt projiziert werden, an welchem der Bildsensor BS angeordnet ist. Mit anderen Worten: das Objektiv OB und die Tubuslinse TL bewirken eine Abbildung des reflektierten Laserstrahls auf dem Bildsensor BS.

Im Sinne dieser Anmeldung kann der Begriff Brennebene auch als der Begriff Brennweitenebene bezeichnet werden. Insbesondere ist ein Querschnittsdurchmesser des Laserstrahls LS im Wesentlichen gleich der Eintrittsöffnung des Objektivs OB. Die Eintrittsöffnung kann auch als Apertur bezeichnet werden.

Das Objektiv OB kann eine oder mehrere Linsen umfassen, welche hintereinander entlang der optischen Achse des Objektivs angeordnet sein können. Das Objektiv kann zum Beispiel eine 10-fache, 20-fache oder zum Beispiel 40-fache Vergrößerung bereitstellen und beispielhaft eine numerische Apertur von zwischen 0,3 und 0,8 aufweisen. Der Durchmesser des parallelen, kollimierten Laserstrahls ist vorzugsweise so dimensioniert, dass die volle Apertur des Mikroskopobjektivs ausgeleuchtet wird.

In dem Fall, dass der Laserstrahl LS ein paralleler, kollimierter Strahlengang ist, wird dann also der Laserstrahl durch das Objektiv OB auf den einen Punkt der Brennebene projiziert, wobei der der Punkt der Brennpunkt sein kann oder ein zu dem Brennpunkt in der Brennebene versetzter Punkt. Hierdurch liegt eine maximale optische Intensität des Laserstrahls an diesem Punkt in der Brennebene vor. Es fallen dann in diesem Fall bzw. diesem Beispiel die Fokussierungsebene und die Brennebene zusammen. Befindet sich durch Verändern des Relativabstandes die Grenzfläche des Probenbereiches an genau der Brennebene, so erfolgt eine Reflexion des auf den Punkt der Brennebene projizierten Laserstrahls zurück zum Objektiv OB, wobei das Objektiv OB und die Tubuslinse TL dann eine Abbildung dieser Reflexion auf einen Punkt des Bildsensor BS bewirken. Es wird sich also dann zumindest ein Pixel bzw. eine geringe Anzahl an Pixeln mit einer besonderen hohen Intensität in einem Bereich des Bildsensors befinden.

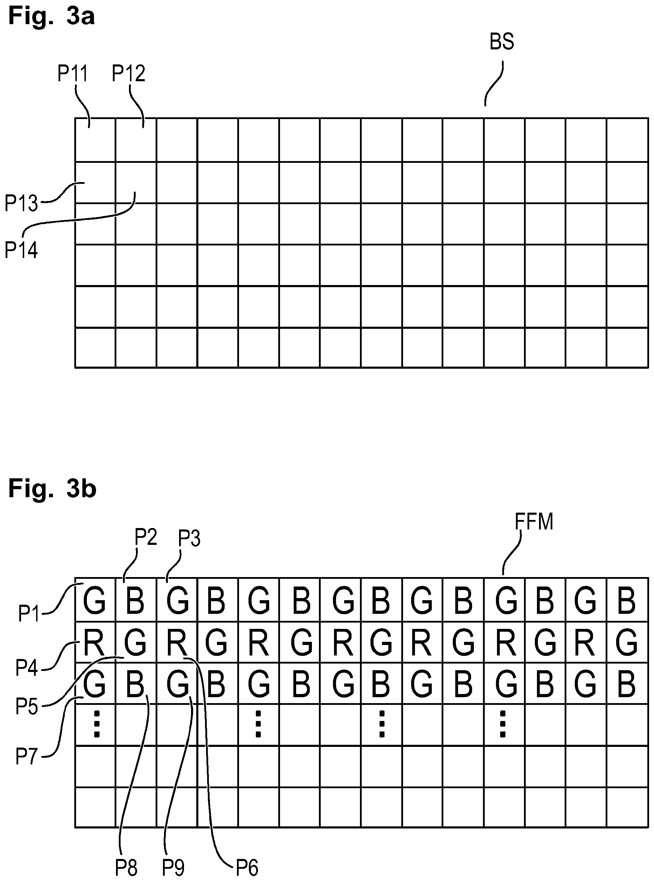

Der Bildsensor BS ist noch einmal in der Figur 3A gezeigt. Der Bildsensor BS weist unterschiedliche einzelne Pixel P11,..., P14 auf.

Dem Bildsensor ist eine Farb-Filter-Matrix FFM aus der Figur 3b vorgeschaltet. Einzelne Farbfilterelemente bzw. Farbkanalelemente P1 bis P9 sind ebenfalls dargestellt. Ein jeweiliger Farbkanal ist durch eine jeweilige bestimmte Farbwahl festgelegt, wobei es sich hier in diesem Ausführungsbeispiel um eine RGB-Farb-Filter-Matrix handelt. Alternativ ist eine CMYK-Farb-Filter-Matrix denkbar. Dem Pixel P11 des Bildsensors BS aus der Figur 3 ist beispielsweise das Matrixelement P1 vorgeschaltet. Dem Pixelelement P14 der Figur 3a ist beispielsweise das Farbfilterelement P5 vorgeschaltet. Einem jeweiligen Pixelelement des Bildsensors BS ist vorzugsweise jeweils ein jeweiliges Farbfilterelement, insbesondere genau ein jeweiliges Filterelement, der Farb-Filter-Matrix FFM vorgeschaltet bzw. zugeordnet.

Eine Gewinnung eines Farbbildes mittels eines Bildsensors BS aus der Figur 3a mit einer vorgeschalteten Farb-Filter-Matrix FFM aus der Figur 3b kann durch ein sogenanntes De-Bayering-Verfahren erfolgen.

Gemäß der Figur 1 weist die Vorrichtung V ferner eine Anregungslichtquelle AL zum Aussenden von Anregungslicht AS auf. Dieses Anregungslicht AS wird noch einmal vorzugsweise durch ein optisches Filter Fl1 gefiltert, bevor es mittels des dichroitischen Strahlteilers SP1 hin zum Objektiv OB und damit hin zum Probenbereich bzw. auf den Probenbereich gerichtet wird. Dieses Anregungslicht dient einer Anregung von Fluoreszenz in den Probenbereich P. Die Anregungslichtquelle ist vorzugsweise eine LED vorzugsweise eine blaue LED.

Fluoreszenzstrahlung FS der biologischen Probe kann dann von dem Probenbereich P zurück durch das Objektiv OB durch den Strahlteiler SP2 hin zu einem optischen Filter Fl2 gelangen. Der optische Filter Fl2 filtert vorzugsweise Licht der Anregungsstrahlung AS heraus. Die Fluoreszenzstrahlung FS durchläuft dann den Strahlteiler SP2 und gelangt von dort zu der Tubuslinse TL, welche zusammen mit dem Objektiv OB eine Abbildung auf dem Bildsensor BS und die dem Sensor vorgeschaltete Farb-Filter-Matrix FM bewirkt. Die Kombination aus dem optischen Filter Fl1, dem optischen Filter Fl2 sowie dem dichroitischer Strahlteiler SP1 kann auch als eine optische Einheit OE2 bezeichnet werden.

Mit anderen Worten: das Objektiv OB ist ausgebildet, den Laserstrahl auf den Probenbereich zu richten und eine Fokussierung des Laserstrahls in einer Fokussierungsebene zu bewirken. Der Bildsensor BS ist ausgebildet zum Erfassen einer Menge von Pixelintensitätswerten, welche durch den an der Grenzfläche des Probenbereichs P reflektierten und durch das Objektiv zurücktransmittiert Laserstrahl auf korrespondierenden Sensorpixeln des Bildsensors bewirkt werden, wobei der Laserstrahl nicht alleine durch das Objektiv OB sondern eben bevorzugt auch noch durch die Linse bzw. Tubuslinse TL auf dem Bildsensor BS abgebildet wird.

Gemäß einer Ausführungsform ist in einem Detektionsstrahlengang zwischen dem Objektiv OB und der Detektionsfläche eine Linse TL, insbesondere eine Tubuslinse, angeordnet, die eine Brennebene des Objektivs auf den Bildsensor abbildet. Hinter dem (bzw. lichtstromabwärts des) Objektiv kann ein paralleler Strahlengang vorliegen und die parallelen Strahlen können von der Tubuslinse in eine bildseitige Brennebene abgebildet werden. Somit hat eine Verschiebung des Objektivs relativ zu der Tubuslinse keinen bzw. keinen Wesentlichen Einfluss auf die Abbildung der parallelen Strahlen in die bildseitige Brennebene der Tubuslinse. An einem bestimmten Punkt innerhalb des Teilbereichs der Detektionsfläche gelangen somit nur Strahlen, die von einem bestimmten, gemeinsamen Punkt in der Brennebene des Objektivs in verschiedenen Richtungen ausgegangen sind, insbesondere dem Brennpunkt. Durch geeignete Wahl der Größe der vorbestimmten Fläche kann somit Streulicht (welches nicht von einem Punkt in der objektseitigen Brennebene des Objektivs in verschiedenen Richtungen ausgegangen ist) von der Detektion zur Fokussierung ausgeschlossen werden.

Der Bildsensor BS ist ein Photosensor, insbesondere ein CMOS-Sensor oder ein CCD-Sensor. Die Farb-Filter-Matrix FFM ist vorzugsweise eine Bayer-Matrix.

Die Farb-Filter-Matrix FFM weist vorzugsweise eine Mehrzahl an Farbkanälen auf, insbesondere wenigstens einen Grünkanal und einen Rotkanal, besonders bevorzugt ferner einen Blaukanal.

Die Vorrichtung V aus Figur 1 weist einen Prozessor P auf, welcher über eine Schnittstelle SC4 mittels eines Steuersignals ST4 die Probenhalterung PH, TI ansteuern kann, sodass das Objektiv OB und der Probenbereich P jeweilige, unterschiedliche Relativabstände zueinander aufweisen.

Mittels einer Schnittstelle SC2 ist der Prozessor P ausgebildet, ein Steuersignal oder mehrere Steuersignale SC2 an die Kamera K bzw. den Bildsensor BS zu senden, sodass durch den Bildsensor Pixelintensitätswerte PW bzw. Sensorwerte SW erfasst werden. Der Bildsensor BS stellt diese Pixelintensitätswerte PW bzw. Sensorwerte SW dann über die Schnittstelle SC2 an den Prozessor P bereit. Hierdurch erfasst also der Prozessor P mittels des Bildsensors BS für einen jeweiligen Relativabstand eine jeweilige Menge von Pixelintensitätswerten. Der Prozessor P kann also die Probenhalterung PH, TI kontinuierlich oder graduell verfahren und dann für jeweilige Relativabstände zwischen Objektiv OB und Probenbereich P ein jeweiliges Bild bzw. eine jeweilige Menge von Pixelintensitätswerten erfassen. Es wird also für einen jeweiligen Relativabstand eine eigene, jeweilige Menge von Pixelintensitätswerten als ein Bild oder bevorzugt ein Teilbild des Bildsensors erfasst. Für einen jeweiligen Relativabstand ermittelt der Prozessor P eine jeweilige Fokusmetrik auf Basis der jeweiligen Menge von Pixelintensitätswerten bzw. auf Basis des jeweiligen Bildes für den jeweiligen Relativabstand.

Eine Einstellung des Relativabstandes zwischen Probenbereich P und Objektiv B kann vorzugsweise alternativ durch den Prozessor P dadurch erfolgen, dass der Prozessor P über eine Schnittstelle SC6 mittels eines Steuersignals ST6 das Objektiv OB so ansteuert, dass das Objektiv OB die seinen Relativabstand entlang der optischen Achse OA des Objektivs OB gegenüber dem Probenbereich P ändert.

Mittels einer Schnittstelle SC7 kann der Prozessor P über ein Steuersignal ST7 diese Laserlichtquelle LL aktivieren oder deaktivieren.

Mittels einer Schnittstelle SC3 kann der Prozessor P über ein Steuersignal ST3 die Anregungslichtquelle AL aktivieren oder deaktivieren.

Der Prozessor P bestimmt auf Basis der ermittelten Fokusmetriken einen bevorzugten Relativabstand zwischen Objektiv OB und Probenbereich P.

Der Prozessor P steuert dann das Objektiv OB und/oder die Probenhalterung PH derart an, dass der bevorzugte Relativabstand eingestellt wird, dass ferner die Anregungslichtquelle AL aktiviert wird sowie das ferner mittels des Bildsensors BS das mikroskopische Fluoreszenzbild als ein Farbbild erfasst wird.

Das Erfassen des mikroskopischen Fluoreszenzbildes als ein Farbbild wird dadurch seitens des Prozessors bewirkt, dass der Prozessor P die Pixelwerte PW bzw. Sensorwerte SW des Bildsensors BS über die Schnittstelle SC2 empfängt und auf Basis dieser Pixelwerte ein entsprechendes Farbbild generiert.

Der Prozessor P muss nicht integraler Bestandteil der Vorrichtung V sein, er kann von der Vorrichtung logisch abgesetzt sein, wie in der Figur 1 durch eine logische Auftrennung TR eingezeichnet. In diesem Fall können die Schnittstellen SC2, SC7, SC3, SC6, SC4 ganz oder teilweise als eine oder mehrere Datenschnittstellen, insbesondere leitungsgebunden oder nicht-leitungsgebunden also drahtlos, zusammengefasst sein, insbesondere in Form einer Local-Area-Network (LAN)-Schnittstelle.

Vorzugsweise weist der Prozessor P eine Schnittstelle SC1 zu einem Netzwerk N auf. Das Netzwerk N ist vorzugsweise ein Datennetzwerk wie beispielsweise das Internet.

Über die Schnittstelle SC1 kann der Prozessor P vorzugsweise von dem Netzwerk N ein Eingangssignal ES empfangen, welches eine Anforderung an den Prozessor P indiziert, das vorgeschlagene Verfahren durchzuführen, um eine Fokussierung herbeizuführen und das Fluoreszenzbild als ein Farbbild zu erfassen.

Vorzugsweise weist der Prozessor P eine Schnittstelle SC5 zu einer Ausgabeeinheit auf, über welche der Prozessors Bilddaten BD bereitstellen kann. Die Ausgabeeinheit AE kann dann beispielsweise ein Monitor oder ein Display sein, sodass die Bilddaten BD beispielsweise digitale Bilddaten nach dem HTMI-Standard sein können. Andere Bilddatenstandards sind möglich. Die Ausgabeeinheit AE kann wiederum in einer Ausführungsform eine Netzwerkschnittstelle sein, über die der Prozessor mittels der Schnittstelle SC5 die Bilddaten BD in digitaler Form in ein Netzwerk übermittelt. Die Schnittstelle SC5 und die Schnittstelle SC1 können in dem Fall, dass die Ausgabeeinheit AE eine Netzwerkschnittstelle ist, auch in Form einer integralen bzw. eine gleiche Schnittstelle gegeben sein.

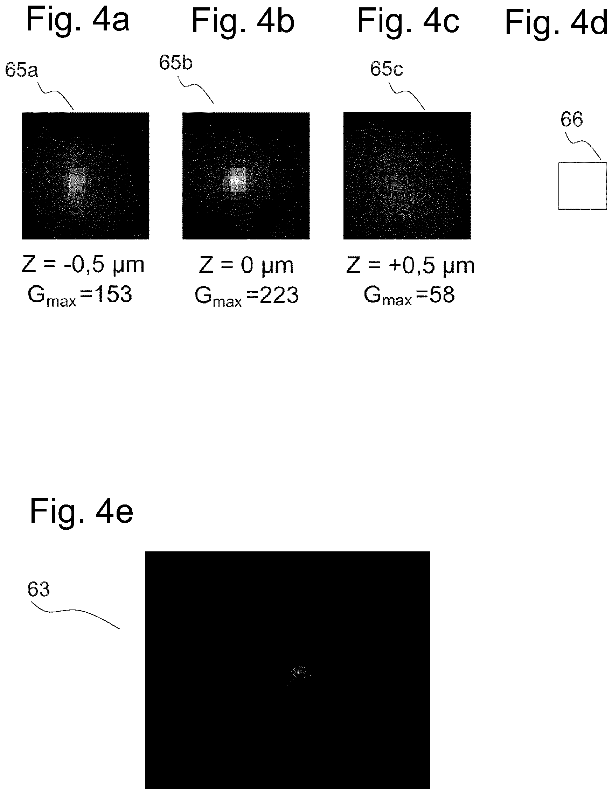

Fig. 4e zeigt ein Gesamtbild einer punktförmigen Laserreflexion, wie es von der gesamten Fläche eines Grauwert-Bildsensors ohne vorgeschaltete Farb-Filter-Matrix für eine Wellenlänge von 650 nm aufgenommen wurde. Das gesamte Bild 63 umfasst zum Beispiel 1024 x 1024 Pixel.

Vorzugsweise wird nur ein Teilbereich des Bildsensors bzw. der Pixel ausgelesen, während der Relativabstand zwischen dem Objektiv OB und dem Probenbereich P verändert wird.

Fig. 4a, 4b und 4c illustrieren dazu beispielhaft Teilbereiche 65a, 65b, 65c und die von den darin enthaltenen Pixeln detektierten Pixelintensitätswerten bzw. Intensitäten als Grauwerte eines Bildes eines reflektierten Laserstrahls für verschiedene Relativabstände. Die Teilbereiche 65a, 65b, 65c können zum Beispiel von 16 x 16 Pixeln gebildet sein. Die Pixelintensitätswerte der Pixel des Teilbereiches 65a entsprechen dann einer Menge von Pixelintensitätswerten für einen Relativabstand. Analoges gilt für die Bereiche 65b bzw. 65c für andere Relativabstände. Die Fig. 4a, 4b und 4c illustrieren also Pixelintensitäten bzw. Bilder, welche bei z = -0,5 µm, z = 0 µm und z = +0,5 µm relativ zu dem Relativabstand zwischen Objektiv und Probenbereich entstehen, wobei die Oberfläche 59 des Biochips 45 in der Brennebene des Objektivs angeordnet ist, so dass der zu bestimmende Relativabstand für z = 0 µm angenommen wird. Der jeweilige höchste Intensitätswert Gmax ist ebenfalls illustriert. Wird die Fokusebene des Objektivs von der entsprechenden Grenzfläche im Objektträger wegbewegt (siehe Fig. 4a, 4c), so wird das Lasersignal abgeschwächt bzw. verbreitert abgebildet. Aus Fig. 4a, 4b und 4c wird deutlich, dass bereits bei Verschiebungen um ca. +/- 500 nm die Aussteuerung der einzelnen Pixel deutlich abnimmt, das heißt, die höchste Pixelintensität über den Teilbereich ist am größten, wenn genau der bevorzugte Relativabstand eingenommen ist, das heißt in dem Fall der Fig. 4b. Durch die Verwendung des hier beschriebenen Systems mit einer Fokussierung des Laserstrahls auf einen Brennpunkt in der Brennebene des Objektivs kann eine besonders genaue Ortsauflösung der z-Position erreicht werden. Würde ein flächig ausgedehntes und gesamtes Muster auf mehrere Pixel des Teilbereiches projiziert werden, so würde dieses Muster auch in der idealen Fokussierungsposition eine größere räumliche Ausdehnung als der hier verwendete Laserstrahl aufweisen, so dass auch eine Ortsauflösung in z-Richtung gröber bzw. ungenauer wäre. Wird beispielsweise als Fokusmetrik der jeweils höchste Pixelintensitätswert herangezogen, so ergeben sich weitere Vorteile: Es würde bei einer Musterprojektion nicht ausreichen, nur eine einzelne höchste Pixelintensität des Teilbereiches als Maß für eine Fokussierung zu betrachten, sondern es müssten mehrere Pixel zusammengefasst und durch eine gemeinsame Analyse der mehreren Pixel müsste eine Fokussierung bezogen auf das flächige Muster als ein Maß für eine Fokussierung bestimmt werden, welches eindeutig zeitaufwendiger wäre als die Betrachtung der höchsten bzw. maximalen Pixelintensität des Bildsensors bzw. eines Teilbereiches davon.

Fig. 4d illustriert beispielhaft eine vorzugsweise verwendete vorbestimmte Fläche bzw. einen Teilbereich 66, in welchem Intensitätswerte erfasst und ausgewertet werden, um vorzugsweise einen höchsten bzw. maximalen Pixelintensitätswert für diesen Bereich (65a, 65b, 65c) zu ermitteln.

Für jedes für einen bestimmten Relativabstand aufgezeichnetes Teilbild kann also vorzugsweise der höchste Pixel-Grauwert bzw. der höchste Intensitätswert ermittelt werden. Mittels Kenntnis des Anforderungssignals ST4 an die Tischvorrichtung TI 37 kann der Prozessor P die Verknüpfung der Kameradaten bzw. Intensitätswerte mit den zugehörigen Relativabständen vornehmen sowie ferner den bevorzugten Relativabstand bestimmen.

Die in die Figuren 4a, 4b, 4c sowie 4e dargestellten Reflexionen eines Laserstrahls als Pixelwerte eines Bildsensors sind für den Fall dargestellt, dass dem Bildsensor keine Farb-Filter-Matrix vorgeschaltet ist und dass dadurch eben keine Veränderung einer Pixelintensität des reflektierten Laserstrahls der Wellenlänge von 650 cm durch unterschiedliche Teilbereiche einer Farb-Filter-Matrix erfolgen.

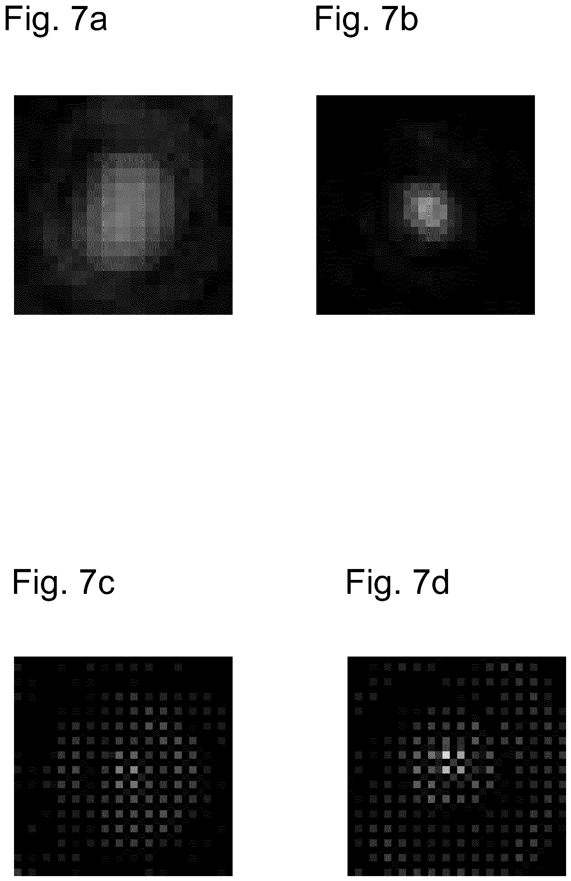

Die Figuren 7c und 7d zeigen sich ergebende beispielhafte Pixelintensitätswerte in dem Fall, dass bei Verwendung eines Bildsensors mit vorgeschalteter Farb-Filter-Matrix eine Laserwellenlänge von 635 nm verwendet wird. In der Figur 7c ist für den Fall einer leichten Defokussierung eine sich ergebende Intensitätsverteilung über den Pixelbereich gezeigt. Klar ersichtlich ist, dass nicht für alle Pixel eine zu erwartende Intensität gegeben ist, sondern dass bestimmte Pixel quasi ausgeblendet sind, da diese Pixel sich hinter Farbfilterelementen befinden, welche nicht einem Rotkanal zugeordnet sind und somit Licht der Wellenlänge von 635 nm nicht hinreichend transmittieren.

Die Figur 7d zeigt bei Verwendung eines Bildsensors mit vorgeschalteter Farb-Filter-Matrix für den Fall einer Fokussierung sich dann ergebende Pixelintensitätswerte. Im Gegensatz zu der Figur 4b ist hier kein klarer Punkt mit einer hohen Intensität des reflektierten Laserstrahls zu sehen, sondern auch hier in der Figur 7b sind einzelne Pixel quasi ausgeblendet. Ein solches Ausblenden von bestimmten Pixeln im Zuge eins Erfassens von resultierenden Pixelintensitätswerte als Repräsentation eines des reflektierten Laserstrahls kann sich auf zu bestimmende Fokusmetriken negativ auswirken. Mit anderen Worten: Die sich ergebenden Pixelintensitätswerte der Figuren 7c und 7d unterliegen Artefakten, welche durch die unterschiedlichen Transmissivitäten der unterschiedlichen Farbkanäle der Farb-Filter-Matrix hervorgerufen werden. Diese Artefakte haben Einfluß auf die zu bestimmenden Fokusmetriken, so dass ein Bestimmungsergebnis des bevorzugten Relativabstandes erschwert bzw. verfälscht werden kann. Das finale Ergebnis kann dann sein, dass für die Erfassung des Fluoreszenzbildes keine hinreichende Fokussierung vorliegt.

Eine beispielhafte Fokusmetrik kann ein höchster bzw. maximaler Pixelintensitätswert innerhalb eines Teilbereiches sein, wie er in der Figur 7c oder 7d dargestellt ist. Alternative hier genannte Fokusmetriken können beispielsweise auf einem oder mehreren der folgenden Operatoren beruhen: gewichteter Mittelwert der Pixelintensitäten im ausgewählten Bildbereich, Auswertung der Halbwertsbreite der Pixelintensitäten, Auswertung von Maximum oder Mittelwert des Kantenbildes der Pixelintensitäten. Ein Kantenbild kann insbesondere gewonnen werden mittels eines der Operatoren Prewitt-Operator, Sobel-Operator, Laplacian-of-Gaussian/Marr-Hildreth-Operator oder Difference-of-Gaussian. Derartige Operatoren sind insbesondere anfällig bzw. sensitiv gegen Artefakte wie sie in den Figuren 7c und 7d zu sehen sind.

Die Figur 7a und die Figur 7b zeigen sich ergebende Pixelintensitätswerte in dem Fall, dass bei Verwendung von Bildsensor und Farb-Filter-Matrix aus Figur 1 zusätzlich ein Laser im Nah-Infrarot-Bereich verwendet wird, insbesondere bei 850 nm. Klar ersichtlich ist für den Fall einer leichten Defokussierung der Figur 7a eine zu erwartende Verteilung einer Pixelintensität, wie auch zuvor in Figur 4a gezeigt. Hier lässt sich nun robust und sicher eine Fokusmetrik ermitteln.

Die Figur 7b zeigt für den Fall einer fast genauen Fokussierung einen scharf reflektierten Laserstrahl mit einer starken Intensität in einem mittleren Bereich, wir in ähnlicher Ausgestaltung auch zuvor in der Figur 4b gezeigt.

Die erfindungsgemäße Lösung unter Verwendung des Bildsensors und der vorgeschalteten Farb-Filter-Matrix erlaubt es aufgrund der Wahl der Wellenlänge des Laserstrahls im Nah-Infrarot-Bereich, an den jeweiligen Relativabständen jeweilige Bilder bzw. jeweilige Mengen an Pixelintensitätswerten zu gewinnen, wie sie in den Figuren 7a und 7b gezeigt sind und dann eben sicher und robust zur Bestimmung jeweiliger Fokusmetriken für jeweilige Relativabstände auf Basis der jeweiligen Bilder bzw. jeweiligen Mengen an Pixelintensitätswerten zu bestimmen.

Probleme mit einer fehlenden Ausrichtung des reflektierten Laserstrahls gegenüber Teilbereichen der Farb-Filter-Matrix können sich insbesondere dann ergeben, wenn der Probenbereich P nicht vollkommen senkrecht gegenüber der optischen Achse OA des Objektivs OB aus der Figur 1 ausgerichtet ist. In einem solchen Fall, dass der Probenbereich P leicht verkippt ist gegenüber der optischen Achse OA des Objektivs OB, kann es dazu kommen, dass der rückreflektierte Laserstrahl LS, welcher hin zu dem Bildsensor BS geleitet wird, leicht schräg gegenüber der Ebene der Farb-Filter-Matrix FFM steht.

Wird dann der Relativabstand zwischen Probenbereich P und Objektiv OB stückweise bzw. graduell oder auch kontinuierlich verändert, so kann es vorkommen, dass der Laserstrahl LS so auf die Farb-Filter-Matrix FFM trifft, dass für unterschiedliche Relativabstände der Laserstrahl jeweils unterschiedliche Teilbereiche P1, .., P9 trifft dann eben abhängig von dem jeweiligen Relativabstand, welcher zwischen Objektiv OB und Probenbereich P eingestellt wird, unterschiedlich stark durch die unterschiedlichen Teilbereiche P1, ..., P9 der Farb-Filter-Matrix FFM transmittiert wird.

Dieses wird durch die Erfindung dadurch kompensiert, dass eben ein Bildsensor BS mit vorgeschalteter Farb-Filter-Matrix FFM immer noch verwendbar ist, da der Laser mit einer Wellenlänge im Nah-Infrarot-Bereich gewählt wird.

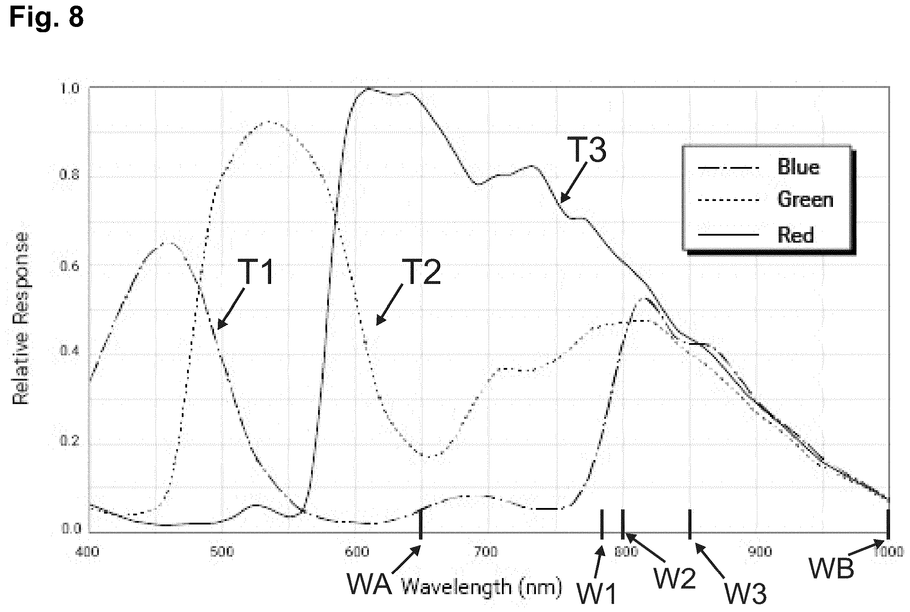

Die Figur 8 zeigt Transmissivitäten T1, T2, T3 für jeweilige Farbkanäle für eine beispielhafte Farb-Filter-Matrix. Die Transmissivität T1 zeigt einen Blaukanal, die Transmissivität T2 zeigt einen Grünkanal, die Transmissivität T3 zeigt ein Rotkanal. Der hier verwendete Bildsensor mit Farb-Filter-Matrix ist vorzugsweise ein Sensor des Typs SONY IMX250.

Eingezeichnet ist eine Wellenlänge WA von 650 nm. An dieser Wellenlänge WA sind Farbfilterelemente wie das Element P8 aus der Figur 3b nicht transmissiv genug, sodass bei Verwendung eines Bildsensor BS mit der vorgeschalteten Farb-Filter-Matrix FFM bei dieser Wellenlänge WA des Lasers ein separater Bildsensor in einem separaten Rotkanal verwendet werden müsste.

Dieses vermeidet die Erfindung, da die Wellenlänge des Lasers in einem Bereich ab der Wellenlänge W1 von 780 nm, bevorzugt ab dem Wellenlängenbereich W2 von 800 nm bis hin zur Wellenlänge W3 von 1000 nm, verwendet wird. Wie aus der Figur 8 ersichtlich wird, ist insbesondere ab dem Wellenlängenbereich W2 die Transmissivität von Farbfilterelementen in den jeweiligen Farbkanälen hoch genug, sodass sich mittels einer im Weiteren noch genauer erläuterten Skalierung der Pixelintensitätswerte bzw. einer Skalierung der einzelnen Farbkanalinformationen Bilder von reflektierten Laserstrahlen bestimmen lassen, wie in den Figuren 7a und 7b dargestellt. Besonders vorteilhaft ist die Verwendung der Wellenlänge von 850 nm in der Wellenlänge W3 aus Figur 8, da hier eine Skalierung von einzelnen Farbkanalinformationen möglicherweise entfallen kann, da die Transmissivitätsunterschiede der einzelnen Farbkanäle hinreichend klein sind.

Das Erfassen einer jeweiligen Menge von Pixelintensitätswerten für einen jeweiligen Relativabstand erfolgt mittels vorzugsweise mittels eines Erfassens jeweiliger Teilmengen von Pixelintensitätswerten für jeweilige Farbkanäle, wobei die jeweilige Menge von Pixelintensitätswerten auf Basis der Teilmengen ermittelt wird. Der Bildsensor stellt vorzugsweise für jeden Farbkanal eine jeweilige Teilmenge von Pixeln bzw. eine jeweilige Teilmenge von Pixelintensitätswerten bereit, wobei für jedes Pixel bzw. jeden Pixelintensitätswert dessen zweidimensionale räumliche Lage mit angegeben wird. Somit kann der Prozessor aus Figur 1 dann die Menge von Pixelintensitätswerten aus den Teilmengen ermitteln bzw. zusammensetzen. Hierbei kann der Prozessor, insbesondere mittels einer Speichereinheit, für einen jeweiligen Farbkanal einen entsprechenden Skalierungsfaktor bereitstellen, so dass zunächst Pixelintensitätswerte einer Teilmenge eines bestimmten Farbkanal mit dem bestimmten, dem Farbkanal zugeordneten Skalierungsfaktor multipliziert werden, bevor dann der Prozessor die Menge von Pixelintensitätswerten aus den Teilmengen ermitteln bzw. zusammensetzt. Es werden also Pixelintensitätswerte einer jeweiligen Teilmenge mit einem vorgegebenen Skalierungsfaktor gewichtet, welcher davon abhängt, zu welcher Art von Farbkanal die jeweilige Teilmenge von Pixelintensitätswerten gehört. Hierdurch lassen sich Transmissivitätsunterschiede der einzelnen Farbkanäle der Farb-Filter-Matrix an der Wellenlänge des Lasers ausgleichen.

Vorzugsweise kann als Fokusmetrik der höchste Intensitätswert aus einem Teilbereich des Bildsensors verwendet werden. Es kann also vorzugsweise in einem Teilbereich des Bildsensors in bevorzugter Weise einfach auf den höchsten Intensitätswert innerhalb des Teilbereiches abgestellt werden, um eine Fokusmetrik bzw. ein Maß für die Fokussierung des Probenbereiches zu erhalten. Es bedarf dann in diesem bevorzugten Fall aufgrund der hier beschriebenen Verwendung des höchsten Pixelintensitätswertes keiner weiteren Verarbeitung oder Filterung der mitunter vielen Pixel-Intensitätswerte des Bildsensors bzw. eines Teilbereiches des Bildsensors, sondern es muss lediglich festgestellt werden, welches der an dem entsprechenden Relativabstand entsprechende höchste Intensitätswert innerhalb des Bildsensors bzw. des betrachteten Teilbereiches ist. Hierbei ist es dann nicht erheblich, welches Pixel den Maximalwert der Intensitätswerte detektiert hat, so dass das Verfahren besonders schnell ist. Wird der Probenbereich gegenüber dem Objektiv weiter verfahren in einen anderen Relativabstand, so erfolgt eine Reflexion des Laserstrahls nicht an einem einzelnen Punkt, welches vorher der Punkt in der Brennebene und insbesondere der Brennpunkt war, sondern die Reflexion erfolgt in einem flächigen Bereich des Probenbereiches bzw. der Grenzfläche. Hierdurch wird also dann die optische Intensität des Laserstrahls über einen größeren Bereich des Teilbereichs verteilt als dies der Fall ist, als wenn der Laserstrahl nur in dem einen einzigen Punkt der Brennebene reflektiert wird. Daher ergeben sich dann auch innerhalb des Teilbereiches auf dem Bildsensor Intensitätswerte, welche in Summe zwar noch die gesamte optische Intensität des Laserstrahls repräsentieren bzw. repräsentieren können, wobei aber der nun höchste Intensitätswert eben auch geringer ist als der höchste Intensitätswert in jener Konfiguration, bei welcher der Laserstrahl mittels der Grenzfläche genau in dem einen Punkt der Brennebene reflektiert wird. Es muss also durch Auswertung des Teilbereiches bzw. dessen Pixel nicht auf eine genaue Herausfilterung eines reflektierten Musters z.B. mittels einer Blende abgestellt werden, sondern die Auswertung des höchsten Intensitätswertes für einen jeweiligen Relativabstand erlaubt eine besonders einfache und schnelle Fokussierung bzw. Bestimmung der Bezugsrelativerfahrposition mit einer besonders hohen Ortsauflösung. In dem Fall, dass mehrere Grenzflächen vorhanden sind, kann mittels des Verlaufs der höchsten Intensitätswerte dann beispielsweise eine dritte Grenzfläche detektiert werden, um einen bevorzugten Relativabstand zu ermitteln. Es kann also somit die Empfindlichkeit des Verfahrens erhöht werden und eine Ausdehnung des abgebildeten Laserstrahls in der Tiefenrichtung kann im Wesentlichen einer Tiefenschärfe der Optik gleichen.

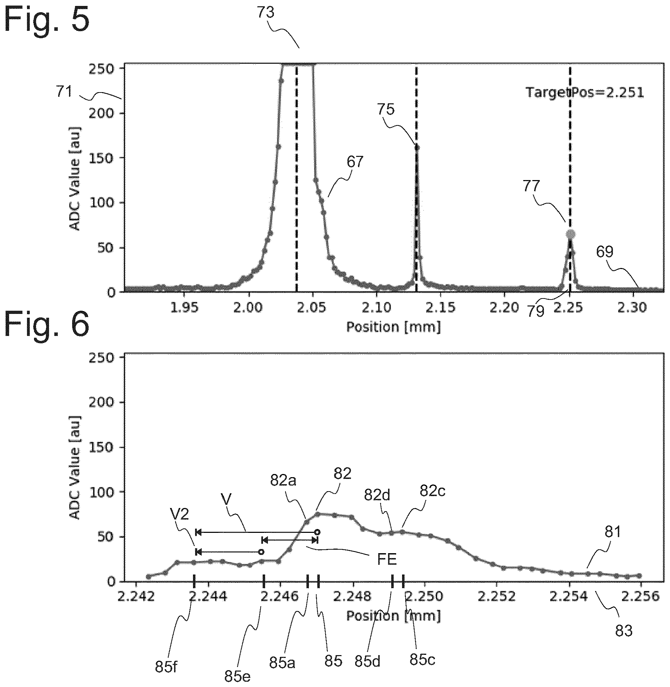

Fig. 5 illustriert ein Beispiel eines Verlaufs 67 der (für jeden Relativabstand) bestimmten höchsten Pixel-Intensitätswerte in Abhängigkeit des Relativabstandes als eine Kurve 67 in einem Koordinatensystem, wobei auf einer Abszisse 69 der Relativabstand (Z-Position) und wobei auf der Ordinate 71 der jeweils höchste Pixel-Intensitätswert in dem Teilbereich bei dem zugehörigen Relativabstand aufgetragen ist. Der niedrigste Z-Wert indiziert hierbei eine Position, bei welcher sich der Probenbereich am weitesten von dem Objektiv entfernt befindet, der höchste Z-Wert indiziert hierbei eine Position, bei welcher sich der Probenbereich am nahesten zum Objektiv befindet. Es erfolgt zunächst ein relatives Verfahren des Objektivs und des Probenbereichs zueinander mittels Verringern eines Relativabstandes zwischen dem Objektiv und dem Probenbereich ausgehend von einem größten Abstand hin zu einem kleinsten Abstand mit einer ersten Abstandsauflösung, wobei der Verlauf der höchsten Pixel-Intensitätswerte bestimmt wird, welcher mehrere Maxima aufweist. Der Verlauf weist insbesondere ein erstes lokales Maximum 73, danach ein zweites lokales Maximum 75 und schließlich ein drittes lokales Maximum 77 des Verlaufs auf.

Die Kurve 67 zeigt ein charakteristisches Signalmuster ("Autofokussignal"), welchem die Geometrie des Probenbereichs, wie er in Fig. 2 illustriert ist, zugrunde liegt. Da der Aufbau des Probenbereichs 2 bekannt ist, kann aus dem Signalverlauf 67 die Z-Position des Biochips 45, insbesondere die Oberfläche 59 des Biochips 45, bestimmt werden.

Die Kurve 67 (Autofokussignal) weist ein erstes Maximum 73 auf, welches von der Reflexion des Laserstrahls 19 an der ersten Grenzfläche 55 (obere Oberfläche des Deckglases 53) herrührt. Ferner weist die Kurve 67 ein zweites Maximum 75 auf, welches von der Reflexion des Laserstrahls 19 von der unteren Oberfläche 57 (zweite Grenzfläche) des Deckglases 53 herrührt. Schließlich weist die Kurve 67 ein drittes Maximum 77 auf, welches von der Reflexion des Laserstrahls 19 von der Oberfläche 59 des Biochips 45 (dritte Grenzfläche) herrührt. Die Fokusposition der Biochip-Oberfläche 59 bzw. der Relativabstand ergibt sich dabei aus der Bestimmung der Z-Position 79 des dritten Signalmaximums 77.

Mit Hilfe einer Steuerung bzw. eines Prozessors und eines Antriebsmittels zum Verfahren des Objektivs 3 kann das Objektiv 3 anschließend unter Vergrößerung des Abstandes zwischen Objektiv und Probenbereich wieder in Richtung des ermittelten Fokusortes bzw. den bevorzugten Relativabstand zurückgefahren werden. Der bevorzugte Relativabstand ist dann insbesondere ein temporär bevorzugter Relativabstand. Dies erfolgt insbesondere unter Verwendung einer zweiten Abstandsauflösung, welche höher bzw. feiner ist als die erste Abstandsauflösung. Dabei wird die Länge der Fahrt über das Autofokussignal so gesteuert, dass simultan zur Bewegung in Z überwacht und ausgewertet wird. Hierbei erfolgt eine Bestimmung jeweils weiterer höchster Pixel-Intensitätswerte an jeweiligen, weiteren Relativabständen sowie eine Detektion eines Vorliegens des Maximum 82 aus der Figur 6 auf Basis der weiteren höchsten Pixel-Intensitätswerte. Vorzugsweise erfolgt dann in dem Fall, dass der Laserstrahl ein zum Objektiv hin kollimiertes, paralleles Strahlenbündel aufweist und ferner die Fokussierungsebene des Laserstrahls mit der Brennebene des Objektivs zusammenfällt, ein Einstellen des finalen Relativabstandes an eine solche finale Position, an welcher das auf Basis der weiteren höchsten Pixel-Intensitätswerte detektierte lokale Maximum vorliegt bzw. vorlag.

Fig. 6 illustriert hierzu ein Autofokussierungssignal, welches von der Reflexion des Laserstrahls 19 von der Oberfläche 59 des Biochips 45 herrührt, das heißt ein drittes Maximum 82 in einem Verlauf an einer Position 85. Der Verlauf 81 der weiteren höchsten Intensitätswerte in dem Teilbereich in Abhängigkeit der Z-Position auf der Abszisse 83 wurde bestimmt unter Verwendung eines Objektivs mit 20-facher Vergrößerung mit einer numerischen Apertur von 0,5, wobei ein Laser mit einer Emissionswellenlänge von λ₀ = 635 nm eingesetzt wurde. Die axiale Auflösung dieses Signals 81 kann zum Beispiel aus der Halbwertsbreite Δ zu ca. 2,1 µm bestimmt werden. Der finale bevorzugte Relativabstand 85 kann zum Beispiel als die Z-Position bestimmt werden, bei der das Maximum 82 auftritt oder als ein Schwerpunkt der Kurve 81 bzw. Schwerpunkt des Maximums 82. Es kann dann das Objektiv relativ zu dem Probenbereich zu dem finalen bevorzugten Relativabstande 85 verfahren werden, an der das Maximum 82 der weiteren höchsten Intensitätswerte vorlag.

Die Fokusposition als der finale bevorzugte Relativabstand gilt vorzugsweise als erreicht und die Fahrtbewegung wird vorzugsweise gestoppt, wenn die folgenden Bedingungen vorzugsweise gemeinsam erfüllt sind:
- Ein zuvor definierter Schwellwert des Autofokussignals wurde überschritten. Dieser Schwellwert wird aus der Signalhöhe des zuvor ermittelten Autofokussignals ermittelt.
- Das Autofokussignal erreicht ein lokales Maximum 82.

Die Oberfläche des Biochips muss jedoch nicht die optimale Bildgebungsebene für die Fluoreszenzmikroskopie repräsentieren, da die Schichtdicke der Probe 51 zum Teil größer sein kann als die Schärfentiefe des Mikroskopiesystems. Daher können um die ermittelte Fokusposition bzw. den ermittelten finalen bevorzugten Relativabstand herum mehrere Fluoreszenzaufnahmen erstellt werden. Daher kann dann vorzugsweise ausgehend von dem finalen bevorzugten Relativabstand eine Erfassung mehrerer Bilder des Probenbereiches mittels des Bildsensors erfolgen. Hierbei erfolgt ein Ändern des Relativabstandes des Objektivs und des Probenbereichs zueinander entlang der optischen Achse an jeweiligen Relativabständen oberhalb und/oder unterhalb des finalen bevorzugten Relativabstandes. Es erfolgt hierbei ferner ein Erfassen jeweiliger Bilder an den jeweiligen Relativabständen mittels des Bildsensors. Der Prozessor speichert dann die jeweiligen Bilder und bestimmt jeweilige Fokusmetriken für die jeweiligen Bilder. Der Prozessor selektiert dann jenes Bild, welches die beste Fokusmetrik aufweist. Vorzugsweise verwirft der Prozessor die anderen Bilder, welche nicht die beste Fokusmetrik aufweisen.

Wie aus Fig. 5 hervorgeht, weisen die Maxima Signalhöhen eines bestimmten Musters auf Aus dem Verlauf kann vorzugsweise das dritte Maximum 77 zum Beispiel als zuverlässig detektiert erkannt werden, falls die Signalhöhe des lokalen Maximums 77 größer als ein zuvor bestimmter oder vorgegebener Schwellwert ist und wenn ferner tatsächlich ein lokales Maximum vorliegt, das heißt, Intensitätswerte rechts und links des bevorzugten Relativabstandes 79 sind geringer als die Intensität genau bei dem bevorzugten Relativabstand. Somit kann vorzugsweise auf zuverlässige Weise der bevorzugt Relativabstand ermittelt werden, an welchem der Laserstrahl auf die Oberfläche des Biochips fokussiert wird. Um die Maxima 73, 75 und 77 zuverlässig voneinander trennen zu können, ist gemäß einer Ausführungsform der vorliegenden Erfindung die Auflösung des Autofokus-Systems etwa gleich der Schärfentiefe des Mikroskopiesystems. Durch die Auswertung einer maximalen Pixelintensität bzw. der höchsten Pixel-Intensität kann sich eine hohe Ortsauflösung des Fokussierungsverfahrens in Z-Richtung ergeben.

Gemäß einer Ausführungsform der vorliegenden Erfindung ist das Verfahren derart ausgebildet, dass ein Relativabstand zwischen dem Objektiv und dem Probenbereich ausgehend von einem größten Abstand zunächst verringert wird, während Intensitätswerte der Pixel des Teilbereichs erfasst werden, so dass insbesondere zunächst ein erstes lokales Maximum von der Reflexion des Laserstrahls von der ersten Grenzfläche herrührend, danach ein zweites lokales Maximum von der Reflexion des Laserstrahls von der zweiten Grenzfläche herrührend und schließlich ein drittes lokales Maximum von der Reflexion des Laserstrahls von der dritten Grenzfläche herrührend detektiert werden. Das erste lokale Maximum kann ein globales Maximum des Verlaufs der Maxima in Abhängigkeit des Relativabstandes sein. Werden alle drei (lokalen) Maxima in dem Verlauf der Maxima in Abhängigkeit des Relativabstandes detektiert, so kann die Zuverlässigkeit der Fokussierung verbessert werden. Innerhalb des Verlaufs der Maxima in Abhängigkeit des Relativabstandes kann ein (lokales) Maximum zum Beispiel dann bestimmt werden, wenn ein bestimmter Schwellwert der Intensität des Pixels überschritten ist. Der Schwellwert kann zum Beispiel aus dem zuvor detektieren (lokalen) Maximum abgeleitet werden. Das erste lokale Maximum kann größer als das zweite lokale Maximum sein und das zweite lokale Maximum kann wiederum größer als oder im Wesentlichen von gleicher Höhe sein wie das dritte lokale Maximum sein. Wird diese Abfolge von Maxima detektiert, so kann eine Zuverlässigkeit der Identifikation der Grenzflächen, und somit die Fokusbestimmung, erhöht werden. Der bevorzugte Relativabstand wird dann also auf Basis des dritten Maximums bestimmt.

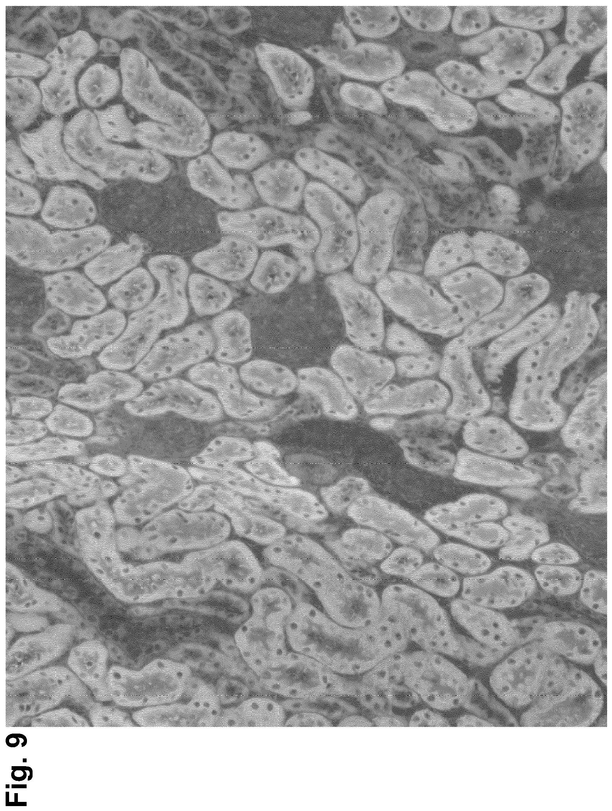

Die Figur 9 zeigt ein beispielhaftes Fluoreszenzbild eines Gewebes als ein Grauwertbild, wobei die Intensitäten des Grauwertbildes auf Intensitäten aus mehreren Farbkanälen basieren, insbesondere einem Grünkanal, einem Rotkanal und einem Blaukanal. Gezeigt ist ein Fluoreszenzbild einer Rattenniere nach Inkubation mit einem Patientenserum und einem sekundären Antikörper, welcher mit einem Fluoreszenzfarbstoff markiert ist.

Für einen Nutzer bzw. Arzt, welcher eine Befundung erstellen sollen, ist es dann insbesondere wichtig zu wissen, welcher Helligkeitswert bzw. Intensitätswert aus welchem Farbbereich bzw. Farbraum stammen.

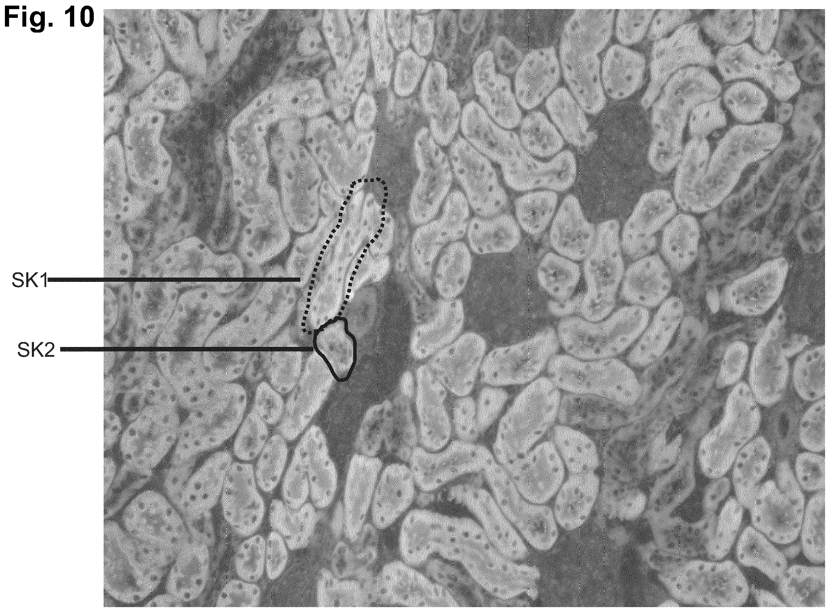

In der Figur 10 ist das gleiche Fluoreszenzbild aus der Figur 9 gezeigt, wobei ferner zwei Strukturen SK1, SK2 umrandet eingezeichnet sind, welche beide zum einem gewissen Grad eine gewissen Helligkeit aufweisen bzw. leuchten.

Ein solches Leuchten kann einerseits durch die Anregung eines in dem Gewebe gebundenen Fluoreszenzfarbstoffes bewirkt werden. Alternativ oder zusätzlich kann es auch eine sogenannte Autofluoreszenz des Gewebes in einem Braun- oder Orangebereich, also mit einem Rotanteil, geben, welche unabhängig von einer Bindung von Fluoreszenzfarbstoffen des sekundären Antikörpers in dem Gewebe ist. Ferner kann ein Bereich eines Gewebes auch dadurch leuchten, dass Licht der Anregungslichtquelle durch das Gewebe reflektiert wird.

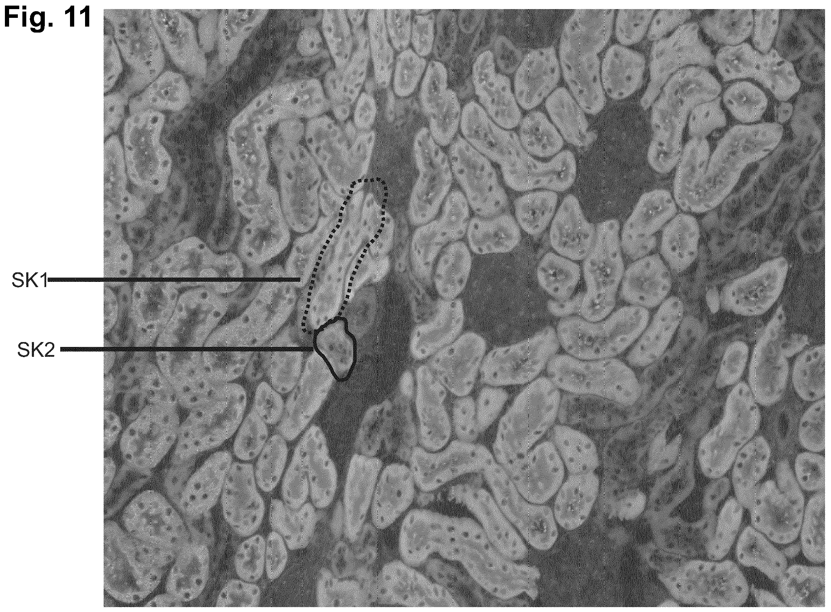

Die Figur 11 zeigt eine reine Grünkanalinformation des gleichen Bildes aus den Figuren 9 und 10. Es ist klar ersichtlich, dass die Struktur SK1 in einem Grünkanal bzw. mit einem Grünanteil stärker leuchtet, als dies für die Struktur SK2 der Fall ist.

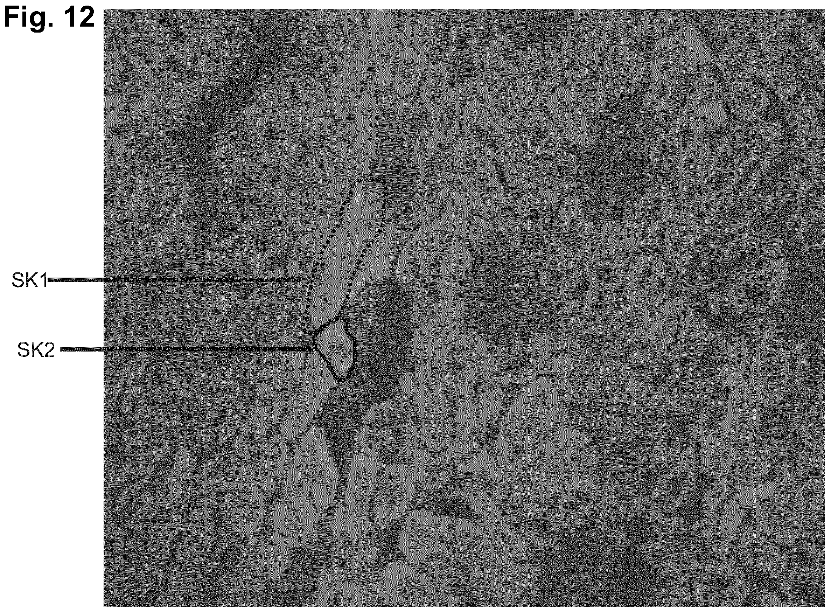

Die Figur 12 zeigt eine reine Rotkanalinformation des gleichen Bildes aus den Figuren 9 und 10. Hier wird es ersichtlich, dass sowohl die Struktur SK1 als auch die Struktur SK2 in dem Rotkanal bzw. mit einem Rotanteil zu einem ungefähr gleichen Maß leuchten.

Hierdurch kann also deutlich gemacht werden, dass die in den Figuren 9 und 10 ähnlich stark leuchtenden Strukturen SK1 und SK2 aufgrund unterschiedlicher Farbanteile zum Leuchten kommen. Die Struktur SK1 wird eher durch ihren Grünanteil dominiert während beide Strukturen SK1 und SK2 zu einem ungefähr gleichen Maße mit einem Rotanteil leuchten. Für einen Befunder ist es also von Vorteil, eine volle Farbinformation eines Gewebes bzw. eines Fluoreszenzbildes als ein Farbbild mit Rotanteil und Grünanteil präsentiert zu bekommen, um dann in dem Farbbild aufgrund der unterschiedlichen Färbungen darauf schließen zu können, ob es sich bei dem Leuchten bzw. der Fluoreszenz
- um eine Fluoreszenz aufgrund einer Autofluoreszenz alleine oder aber
- um eine Autofluoreszenz gemeinsam mit einer Fluoreszenz aufgrund einer Bindung eines spezifischen Antikörpers aus dem Patientenserum in Verbindung mit einer Bindung des mit dem Fluoreszenzfarbstoff markierten sekundären Antikörper
handelt.

Daher ist das erfindungsgemäße Verfahren sowie die erfindungsgemäße Vorrichtung besonders vorteilhaft, da mittels des einen Bildsensors und der Farb-Filter-Matrix zum einen das Fluoreszenzbild als ein digitales Farbbild mit Grünanteil und Rotanteil erfasst werden kann, gleichzeitig aber auch ohne Verwendung eines weiteren Bildsensors eine Reflexion des Laserstrahls mittels des gleichen Bildsensors mit vorgeschalteter Farb-Filter-Matrix erfasst werden kann, um eine Fokussierung herbeizuführen, da der Laser eine Wellenlänge im Nah-Infrarot-Bereich aufweist.

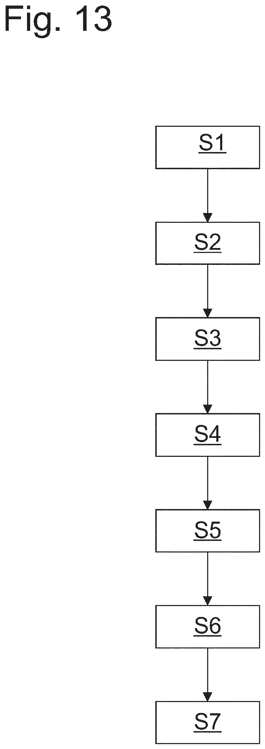

Figur 13 zeigt ein Ablaufdiagramm von Schritten, welche der Prozessor gemäß einer bevorzugten Ausführungsform durchführt.

In einem Schritt S1 stellt der Prozessor das Steuersignal ST7 zum Aktivieren einer Laserlichtquelle bereit. In einem Schritt S2 stellt der Prozessor das Steuersignal ST4 und/oder ST6 zum Ansteuern des Objektivs und/oder der Probenhalterung bereit, so dass das Objektiv und die Probenhalterung jeweilige, unterschiedliche Relativabstände zueinander aufweisen. In einem Schritt S3 erfasst der Prozessor jeweilige Menge von Pixelintensitätswerten für jeweilige Relativabstände, indem der Prozessor von dem Bildsensor mit der vorgeschalteten Farb-Filter-Matrix für einen jeweiligen Relativabstand eine jeweilige Menge von Pixelintensitätswerten entgegennimmt.

Vorzugsweise erfolgt in dem Schritt S3 insbesondere das Erfassen einer jeweiligen Menge von Pixelintensitätswerten mittels eines Erfassens jeweiliger Teilmengen von Pixelintensitätswerten jeweiliger Farbkanäle für den entsprechenden Relativabstand. Hierzu nimmt der Prozessor von dem Bildsensor jeweilige Teilmengen von Pixelintensitätswerten jeweiliger Farbkanäle entgegen. Der Prozessor ermittelt dann die jeweilige Menge von Pixelintensitätswerten auf Basis der jeweiligen Teilmengen der jeweiligen Farbkanäle mittels farbkanalabhängiger Skalierung der Pixelintensitätswerte und mittels Zusammensetzen der Menge der Pixelintensitätswerte aus den skalierten, jeweiligen Teilmengen von Pixelintensitätswerten.

In einem Schritt S4 bestimmt der Prozessor für einen jeweiligen Relativabstand eine jeweilige Fokusmetrik auf Basis der für den jeweiligen Relativabstand erfassten bzw. bestimmten jeweiligen Menge von Pixelintensitätswerten.

In einem Schritt S5 stellt der Prozessor über das Steuersignal ST4 und/oder das Steuersignal ST6 den bevorzugten Relativabstand ein. Ein einem Schritt S6 Aktiviert der Prozessor mittels des Steuersignals ST3 die Anregungslichtquelle.

In einem Schritt S7 nimmt der Prozessor Pixelintensitätswerte von dem Bildsensor entgegen und bestimmt bzw. erfasst so das mikroskopische Fluoreszenzbild mittels des Bildsensors (BS),

Es sollte verstanden werden, dass Merkmale, welche individuell oder in irgendeiner Kombination im Zusammenhang mit dem Verfahren zum Aufnehmen eines Bildes eines Probenbereichs beschrieben, erläutert oder vorgesehen sind, ebenso gut, individuell oder in irgendeiner Kombination auf ein Mikroskopiesystem zum Aufnehmen eines Bildes eines Probenbereichs angewendet werden können, gemäß Ausführungsformen der vorliegenden Erfindung.

Je nach bestimmten Implementierungsanforderungen können Ausführungsbeispiele der Erfindung den Prozessor in Hardware und/oder in Software umsetzen. Eine Umsetzung des hier genannten Prozessors kann hier als wenigstens eine Einheit erfolgen oder aber durch mehrere Einheiten im Verbund. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird. Eine programmierbare Hardwarekomponente kann als Steuereinheit durch einen Computerprozessor (CPU = Central Processing Unit), einen Computer, ein Computer-system, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein. Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Allgemein können Ausführungsbeispiele oder Teile der Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren oder ein Teil eines Verfahrens durchzuführen, wenn das Programm auf einem Prozessor oder einer programmierbaren Hardwarekomponente abläuft.

## Patentansprüche

1. Verfahren zum Aufnehmen eines mikroskopischen Fluoreszenzbildes eines Probenbereiches (P) mit einer biologischen Probe, aufweisend:
- Richten eines Laserstrahls (LS) mittels wenigstens eines Objektivs (OB) auf den Probenbereich (P), welcher mindestens eine Grenzfläche (59) aufweist, wobei das Objektiv (OB) eine Fokussierung des Laserstrahls (OB) in einer Fokussierungsebene bewirkt,
- Ändern eines Relativabstandes zwischen dem Objektiv (OB) und dem Probenbereich (P) entlang einer optischen Achse (OA) des Objektivs (OB) zum Bewirken jeweiliger, unterschiedlicher Relativabstände,
- für einen jeweiligen Relativabstand,
o Erfassen einer jeweiligen Menge von Pixelintensitätswerten, welche durch den an der Grenzfläche (57) reflektierten und durch das Objektiv (OB) zurücktransmittierten Laserstrahl (LS) auf korrespondierenden Sensorpixeln eines Bildsensors (BS) bewirkt werden,
o sowie ferner Bestimmen einer jeweiligen Fokusmetrik auf Basis der für den jeweiligen Relativabstand erfassten jeweiligen Menge von Pixelintensitätswerten,
- Ermitteln eines bevorzugten Relativabstandes auf Basis der ermittelten Fokusmetriken,
- Einstellen des bevorzugten Relativabstandes, Beleuchten des Probenbereiches (P) mit einer Anregungsstrahlung (AS) sowie Erfassen des mikroskopischen Fluoreszenzbildes mittels des Bildsensors (BS),
**dadurch gekennzeichnet,**
- **dass** der Bildsensor (BS) ein Photosensor (PS) mit einer vorgeschalteten Farb-Filter-Matrix (FFM) ist,
o welche eine Matrix mit einer Mehrzahl an Farbkanälen ist,
o welche ferner unterschiedliche Filterelement-Typen für unterschiedliche Farbkanäle aufweist
o und welche ferner an allen ihren unterschiedlichen Farbkanälen transmissiv für Licht des Nah-Infrarot-Bereiches einer Wellenlänge größer 780 nm ist,
- **dass** das mikroskopische Fluoreszenzbild ein Farbbild ist
- und **dass** der Laserstrahl (LS) eine Wellenlänge (WB) im Nah-Infrarot Bereich ab 780nm aufweist.

2. Verfahren nach Anspruch 1,
**dadurch gekennzeichnet, dass** das mikroskopische Fluoreszenzbild ein digitales Farbbild ist, insbesondere ein nicht-monochromes, digitales Farbbild, bevorzugt aufweisend wenigstens einen Grünanteil und einen Rotanteil, besonders bevorzugt ferner aufweisend einen Blauanteil.

3. Verfahren nach Anspruch 1,
**dadurch gekennzeichnet, dass** die Wellenlänge größer als 800 nm ist, besonders bevorzugt gleich oder größer 850 nm.

4. Verfahren nach Anspruch 1,
**dadurch gekennzeichnet, dass** die Wellenlänge in einem Bereich von 780 nm bis 1000 nm liegt, bevorzugt 800nm bis 1000 nm.

5. Verfahren nach Anspruch 1,
**dadurch gekennzeichnet, dass** die Farb-Filter-Matrix (FFM) eine Matrix mit einer Mehrzahl an Farbkanälen ist mit wenigstens einem Grünkanal und einem Rotkanal, bevorzugt mit ferner auch einem Blaukanal.

6. Verfahren nach Anspruch 5,
**dadurch gekennzeichnet, dass** die Farb-Filter-Matrix (FFM) eine Bayer-Matrix ist.

7. Verfahren nach Anspruch 1,
**dadurch gekennzeichnet, dass** der Photosensor (PS) ein CMOS-Sensor oder CCD-Sensor ist.

8. Verfahren nach Anspruch 1,
wobei das Erfassen einer jeweiligen Menge von Pixelintensitätswerten für einen jeweiligen Relativabstand erfolgt mittels eines Erfassens jeweiliger Teilmengen von Pixelintensitätswerten jeweiliger Farbkanäle und wobei die jeweilige Menge von Pixelintensitätswerten auf Basis der Teilmengen ermittelt wird.

9. Verfahren nach Anspruch 8,
**dadurch gekennzeichnet, dass** die jeweiligen Farbkanäle an der Wellenlänge des Laserstrahls (LS) eine jeweilige Transmissivität aufweisen, welche maximal um einen Faktor 5 voneinander abweichen.

10. Verfahren nach Anspruch 1,
wobei der Laserstrahl (LS) im Wesentlichen ein kollimiertes, paralleles Strahlenbündel aufweist.

11. Verfahren nach Anspruch 1,
wobei in einem Detektionsstrahlengang zwischen dem Objektiv (OB) und dem Bildsensor (BS) eine Linse oder ein Linsensystem (TS) angeordnet ist, die bzw. das eine Brennebene des Objektivs (OB) auf den Bildsensor (BS) abbildet.

12. Verfahren nach Anspruch 1,
ferner aufweisend
- Bestimmen eines jeweils höchsten Pixelintensitätswertes als eine jeweilige Fokusmetrik für einen jeweiligen Relativabstand auf Basis der jeweiligen Menge von Pixelintensitätswerten,
- Bestimmen eines Verlaufs (73) der höchsten Pixelintensitätswerte durch Zuordnen des jeweils höchsten Pixelintensitätswertes zu dem jeweiligen Relativabstand,
- Bestimmen des bevorzugten Relativabstandes anhand mindestens eines Maximums (77) des Verlaufs (73) der höchsten Pixelintensitätswerte.

13. Verfahren nach Anspruch 12,
ferner aufweisend
- Ändern des Relativabstandes mittels Verringern des Relativabstandes ausgehend von einem größten Abstand hin zu einem kleinsten Abstand unter Verwendung einer ersten Abstandsauflösung, sodass der Verlauf mehrere Maxima (73, 75, 77) aufweist,
- Bestimmen eines temporär bevorzugten Relativabstandes (79) auf Basis der mehreren Maxima (73, 75, 77),
- Vergrößern des Relativabstandes hin zu dem temporär bevorzugten Relativabstand unter Verwendung einer zweiten Abstandsauflösung, welche höher ist als die erste Abstandsauflösung, bei gleichzeitigem Erfassen von jeweiligen höchsten Pixelintensitätswerten (81) als jeweilige Fokusmetriken an jeweiligen, weiteren Relativabständen,
- Detektieren eines Vorliegens eines lokalen Maximums (82) auf Basis der weiteren höchsten Pixelintensitätswerte (81) und Bestimmen des bevorzugten, finalen Relativabstandes als der Relativabstand, bei welchem das lokale Maximum vorliegt.

14. Mikroskopiersystem (V) zum Aufnehmen eines mikroskopischen Fluoreszenzbildes eines Probenbereiches (P) mit einer biologischen Probe, aufweisend
eine Probenhalterung (PH) zum Halten des Probenbereiches (P), welcher mindestens eine Grenzfläche (57) aufweist, eine Laserquelle (LL) zum Erzeugen eines Laserstrahls (LS), eine Anregungslichtquelle (AL) zum Aussenden von Anregungslicht (AL) auf den Probenbereich (P), wenigstens ein Objektiv (OB), welches ausgebildet ist, den Laserstahl (LS) auf den Probenbereich (P) zu richten und ferner eine Fokussierung des Laserstrahls (LS) in einer Fokussierungsebene zu bewirken, sowie einen Bildsensor (BS) zum Erfassen einer Menge von Pixelintensitätswerten, welche durch den an der Grenzfläche (59) reflektierten und durch das Objektiv (OB) zurücktransmittierten Laserstrahl (LS) auf korrespondierenden Sensorpixeln des Bildsensors (BS) bewirkt werden,
wobei das Objektiv (OB) und die Probenhalterung (PH) entlang einer optischen Achse (OA) des Objektivs (OB) relativ zueinander verfahrbar sind, so dass ein Relativabstand zwischen Objektiv (OB) und Probenbereich (P) verändert werden kann,
ferner aufweisend wenigstens einen Prozessor (P), welcher ausgebildet ist,
- das Objektiv (OB) und/oder die Probenhalterung (PH) derart anzusteuern, dass das Objektiv (OB) und die Probenhalterung bzw. der Probenbereich (P) jeweilige, unterschiedliche Relativabstände zueinander aufweisen,
- für einen jeweiligen Relativabstand eine jeweilige Menge von Pixelintensitätswerten mittels des Bildsensors (BS) zu erfassen und ferner eine jeweilige Fokusmetrik auf Basis der jeweiligen Menge von Pixelintensitätswerten zu ermitteln,
- auf Basis der ermittelten Fokusmetriken einen bevorzugten Relativabstand zu bestimmen,
- das Objektiv (OB) und/oder die Probenhalterung (PH) derart anzusteuern, dass der bevorzugte Relativabstand eingestellt wird, ferner die Anregungslichtquelle (AL) zu aktivieren sowie mittels des Bildsensors (BS) das mikroskopische Fluoreszenzbild zu erfassen,
**dadurch gekennzeichnet, dass**
- der Bildsensor (BS) ein Photosensor mit einer vorgeschalteten Farb-Filter-Matrix (FFM) ist,
o welche eine Matrix mit einer Mehrzahl an Farbkanälen ist,
o welche ferner unterschiedliche Filterelement-Typen für unterschiedliche Farbkanäle aufweist
o und welche ferner an allen ihren unterschiedlichen Farbkanälen transmissiv für Licht des Nah-Infrarot-Bereiches einer Wellenlänge größer 780 nm ist,
- dass das mikroskopische Fluoreszenzbild ein Farbbild ist
- und dass der Laserstrahl (LS) eine Wellenlänge (WB) im Nah-Infrarot Bereich ab 780nm aufweist.

## Claims

1. Method for recording a microscopic fluorescence image of a sample region (P) containing a biological sample, said method comprising:
- directing a laser beam (LS) by means of at least one objective (OB) on the sample region (P), the latter having at least one boundary surface (59), wherein the objective (OB) effectuates focusing of the laser beam (LS) in a focusing plane,
- changing a relative distance between the objective (OB) and the sample region (P) along an optical axis (OA) of the objective (OB) for the purposes of effecting respective, different relative distances,
- for a respective relative distance:
o capturing a respective set of pixel intensity values that are effectuated on corresponding sensor pixels of an image sensor (BS) by the laser beam (LS) that is reflected at the boundary surface (57) and transmitted back through the objective (OB)
o and further determining a respective focus metric on the basis of the respective set of pixel intensity values captured for the respective relative distance,
- determining a preferred relative distance on the basis of the determined focus metrics,
- setting the preferred relative distance, illuminating the sample region (P) with excitation radiation (AS) and capturing the microscopic fluorescence image by means of the image sensor (BS),
**characterized in that**
- the image sensor (BS) is a photosensor (PS) with a colour filter matrix (FFM) disposed upstream thereof,
o which is a matrix with a plurality of colour channels,
o which comprises different filter element types for different colour channels,
o and which is transmissive to light in the near infrared range with a wavelength greater than 780 nm in all color channels,
- **in that** the microscopic fluorescence image is a colour image
- and **in that** the laser beam (LS) has a wavelength (WB) greater than 780nm in the near infrared range.

2. Method according to Claim 1,
**characterized in that** the microscopic fluorescence image is a digital colour image, more particularly a non―monochrome, digital colour image, preferably having at least a green component and a red component, particularly preferably further having a blue component.

3. Method according to Claim 1,
**characterized in that** the wavelength is greater than 800 nm, particularly preferably greater than or equal to 850 nm.

4. Method according to Claim 1,
**characterized in that** the wavelength lies in a range of 780 nm to 1000 nm, preferably 800 nm to 1000 nm.

5. Method according to Claim 1,
**characterized in that** the colour filter matrix (FFM) is a matrix with a plurality of colour channels with at least a green channel and a red channel, preferably further with also a blue channel.

6. Method according to Claim 5,
**characterized in that** the colour filter matrix (FFM) is a Bayer matrix.

7. Method according to Claim 1,
**characterized in that** the photosensor (PS) is a CMOS sensor or a CCD sensor.

8. Method according to Claim 1,
wherein capturing a respective set of pixel intensity values for a respective relative distance is implemented by way of capturing respective subsets of pixel intensity values of respective colour channels and wherein the respective set of pixel intensity values is determined on the basis of the subsets.

9. Method according to Claim 8,
**characterized in that** the respective colour channels have a respective transmissivity at the wavelength of the laser beam (LS), said transmissivity values deviating from one another by no more than a factor of 5.

10. Method according to Claim 1,
wherein the laser beam (LS) substantially has a collimated, parallel bundle of rays.

11. Method according to Claim 1,
wherein a lens or lens system (TS) is disposed in a detection beam path between the objective (OB) and the image sensor (BS), said lens or lens system imaging a focal plane of the objective (OB) on the image sensor (BS).

12. Method according to Claim 1,
further comprising:
- determining a respective highest pixel intensity value as a respective focus metric for a respective relative distance on the basis of the respective set of pixel intensity values,
- determining a profile (73) of the highest pixel intensity values by assigning the respective highest pixel intensity value to the respective relative distance,
- determining the preferred relative distance on the basis of at least one maximum (77) of the profile (73) of the highest pixel intensity values.

13. Method according to Claim 12,
further comprising:
- changing the relative distance by reducing the relative distance to a smallest distance using a first distance resolution after starting from a greatest distance such that the profile has a plurality of maxima (73, 75, 77),
- determining a temporarily preferred relative distance (79) on the basis of the plurality of maxima (73, 75, 77),
- increasing the relative distance to the temporarily preferred relative distance using a second distance resolution, which is higher than the first distance resolution, while simultaneously capturing respective highest pixel intensity values (81) as respective focus metrics at respective, further relative distances,
- detecting the presence of a local maximum (82) on the basis of the further highest pixel intensity values (81) and determining the preferred, final relative distance as the relative distance at which the local maximum is present.

14. Microscopy system (V) for recording a microscopic fluorescence image of a sample region (P) containing a biological sample, said microscopy system comprising:
a sample holder (PH) for holding the sample region (P) that has at least one boundary surface (57), a laser source (LL) for generating a laser beam (LS), an excitation light source (AL) for emitting excitation light (AS) onto the sample region (P), at least one objective (OB) that is embodied to direct the laser beam (LS) on the sample region (P) and further effectuate focusing of the laser beam (LS) in a focusing plane, and an image sensor (BS) for capturing a set of pixel intensity values that are effectuated on corresponding sensor pixels of the image sensor (BS) by the laser beam (LS) that is reflected at the boundary surface (59) and transmitted back through the objective (OB),
wherein the objective (OB) and the sample holder (PH) are displaceable relative to one another along an optical axis (OA) of the objective (OB) such that a relative distance between objective (OB) and sample region (P) can be altered, further comprising at least one processor (P), the latter being embodied to
- actuate the objective (OB) and/or the sample holder (PH) in such a way that the objective (OB) and the sample holder or the sample region (P) have respective, different relative distances from one another,
- capture a respective set of pixel intensity values for a respective relative distance by means of the image sensor (BS) and further determine a respective focus metric on the basis of the respective set of pixel intensity values,
- determine a preferred relative distance on the basis of the determined focus metrics,
- actuate the objective (OB) and/or the sample holder (PH) in such a way that the preferred relative distance is set, further activate the excitation light source (AL) and capture the microscopic fluorescence image by means of the image sensor (BS),
**characterized**
- **in that** the image sensor (BS) is a photosensor with a colour filter matrix (FFM) disposed upstream thereof,
o which is a matrix with a plurality of colour channels,
o which comprises different filter element types for different colour channels,
o and which is transmissive to light in the near infrared range with a wavelength greater than 780 nm in all color channels,
- **in that** the microscopic fluorescence image is a colour image
- and **in that** the laser beam (LS) has a wavelength (WB) greater than 780nm in the near infrared range.

## Revendications

1. Procédé d'acquisition d'une image de fluorescence microscopique d'une zone d'échantillon (P) comportant un échantillon biologique, ledit procédé comportant les étapes suivantes :
- diriger un rayon laser (LS) au moyen d'au moins un objectif (OB) sur la zone d'échantillon (P) qui comporte au moins une interface (59), l'objectif (OB) effectuant une focalisation du rayon laser (OB) dans un plan de focalisation,
- modifier une distance relative entre l'objectif (OB) et la zone d'échantillon (P) le long d'un axe optique (OA) de l'objectif (OB) pour générer des distances relatives différentes,
- pour une distance relative respective,
o acquérir un ensemble respectif de valeurs d'intensité de pixel qui sont générées par le rayon laser (LS), réfléchi au niveau de l'interface (57) et rétrodiffusé à travers l'objectif (OB), sur des pixels correspondants d'un capteur d'image (BS),
o et déterminer en outre une métrique de foyer respective sur la base de la quantité respective de valeurs d'intensité de pixel qui est acquise pour la distance relative respective,
- déterminer une distance relative préférée sur la base de la métrique de focus déterminée,
- régler la distance relative préférée, éclairer la zone d'échantillon (P) avec un rayonnement d'excitation (AS) et acquérir l'image de fluorescence microscopique au moyen du capteur d'image (BS),
**caractérisé en ce que**,
- le capteur d'image (BS) est un photo-capteur (PS) comprenant une matrice de filtre couleur (FFM) montée en amont,
o qui est une matrice pourvue d'une pluralité de canaux de couleur,
o qui comporte également différents types d'éléments filtrants pour différents canaux de couleur
o et qui est également transmissible sur l'ensemble de ses différents canaux de couleur pour la lumière dans la gamme des infrarouges proches d'une longueur d'onde supérieure à 780 nm,
- l'image microscopique de fluorescence est une image couleur
- et le rayon laser (LS) a une longueur d'onde (WB) dans la gamme des infrarouges proches à partir de 780 nm.

2. Procédé selon la revendication 1, **caractérisé en ce que** l'image de fluorescence microscopique est une image couleur numérique, en particulier une image couleur numérique non monochrome, comportant de préférence au moins une composante verte et une composante rouge, de manière particulièrement préférée également une composante bleue.

3. Procédé selon la revendication 1,
**caractérisé en ce que** la longueur d'onde est supérieure à 800 nm, de manière particulièrement préférée supérieure ou égale à 850 nm.

4. Procédé selon la revendication 1,
**caractérisé en ce que** la longueur d'onde est dans une gamme allant de 780 nm à 1000 nm, de préférence de 800 nm à 1000 nm.

5. Procédé selon la revendication 1,
**caractérisé en ce que** la matrice de filtre couleur (FFM) est une matrice comprenant une pluralité de canaux de couleur comportant au moins un canal vert et un canal rouge, de préférence également un canal bleu.

6. Procédé selon la revendication 5,
**caractérisé en ce que** la matrice de filtre couleur (FFM) est une matrice de Bayer.

7. Procédé selon la revendication 1,
**caractérisé en ce que** le photo-capteur (PS) est un capteur CMOS ou un capteur CCD.

8. Procédé selon la revendication 1,
l'acquisition d'un ensemble respectif de valeurs d'intensité de pixel pour une distance relative respective étant effectuée au moyen de l'acquisition de sous-ensembles respectifs de valeurs d'intensité de pixel des canaux de couleur respectifs et l'ensemble respectif de valeurs d'intensité de pixel étant déterminé sur la base des sous-ensembles.

9. Procédé selon la revendication 8,
**caractérisé en ce que** les canaux de couleur respectifs à la longueur d'onde du rayon laser (LS) ont une transmissivité respective qui diffère les unes des autres d'un facteur 5 au maximum.

10. Procédé selon la revendication 1,
le rayon laser (LS) comportant sensiblement un faisceau de rayons parallèle collimaté.

11. Procédé selon la revendication 1,
une lentille ou un système de lentilles (TS), qui reproduit un plan focal de l'objectif (OB) sur le capteur d'image (BS), étant disposé dans un trajet de rayon de détection entre l'objectif (OB) et le capteur d'image (BS).

12. Procédé selon la revendication 1,
comprenant en outre les étapes suivantes
- déterminer une valeur d'intensité de pixel respective la plus élevée comme métrique de foyer respective pour une distance relative respective sur la base de l'ensemble respectif de valeurs d'intensité de pixel,
- déterminer une courbe (73) des valeurs d'intensité de pixel les plus élevées par association de la valeur d'intensité de pixel la plus élevée à la distance relative respective,
- déterminer la distance relative préférée sur la base d'au moins un maximum (77) de la courbe (73) des valeurs d'intensité de pixel.

13. Procédé selon la revendication 12,
comportant en outre les étapes suivantes
- modifier la distance relative par réduction de la distance relative à partir d'une distance la plus grande vers une distance la plus petite à l'aide d'une première résolution de distance de sorte que la courbe ait une pluralité de maximum (73, 75, 77),
- déterminer une distance relative (79) temporairement préférée sur la base de la pluralité de maximum (73, 75, 77),
- augmenter la distance relative vers la distance relative temporairement préférée à l'aide d'une deuxième résolution de distance, qui est supérieure à la première résolution de distance, tout en acquérant simultanément des valeurs d'intensité de pixel respectives les plus élevées (81) comme métriques de foyer respectives à d'autres distances relatives respectives,
- détecter la présence d'un maximum local (82) sur la base des autres valeurs d'intensité de pixel les plus élevées (81) et déterminer la distance relative finale préférée comme distance relative à laquelle le maximum local est présent.

14. Système de microscopie (V) destiné à acquérir une image de fluorescence microscopique d'une zone d'échantillon (P) comportant un échantillon biologique, ledit système comportant
un porte-échantillon (PH) destiné à maintenir la zone d'échantillon (P) qui comporte au moins une interface (57), une source laser (LL) destinée à générer un rayon laser (LS), une source de lumière d'excitation (AL) destinée à émettre une lumière d'excitation (AL) sur la zone d'échantillon (P), au moins un objectif (OB) qui est conçu pour diriger le rayon laser (LS) sur la zone d'échantillon (P) et également à effectuer une focalisation du rayon laser (LS) dans un plan de focalisation, et un capteur d'image (BS) destiné à acquérir un ensemble de valeurs d'intensité de pixel qui sont générées par le rayon laser (LS), réfléchi au niveau de l'interface (59) et rétrodiffusé à travers l'objectif (OB), sur les pixels correspondants du capteur d'image (BS),
l'objectif (OB) et le porte-échantillon (PH) pouvant être déplacés l'un par rapport à l'autre le long d'un axe optique (OA) de l'objectif (OB) de façon à pouvoir modifier une distance relative entre l'objectif (OB) et la zone d'échantillon (P),
ledit système comprenant en outre au moins un processeur (P) qui est conçu pour
- commander l'objectif (OB) et/ou le porte-échantillon (PH) de telle sorte que l'objectif (OB) et le porte-échantillon ou la zone d'échantillon (P) aient des distances relatives différentes entre eux,
- détecter un ensemble respectif de valeurs d'intensité de pixel pour une distance relative respective au moyen du capteur d'image (BS) et en outre déterminer une métrique de foyer respective sur la base de l'ensemble respectif de valeurs d'intensité de pixel,
- déterminer une distance relative préférée sur la base des métriques de foyer déterminées,
- commander l'objectif (OB) et/ou le porte-échantillon (PH) de façon à régler la distance relative préférée, en outre activer la source de lumière d'excitation (AL) et acquérir l'image de fluorescence microscopique au moyen de l'image de capteur (BS),
**caractérisé en ce que**
- le capteur d'image (BS) est un photo-capteur comportant une matrice de filtre couleur (FFM) montée en amont,
o qui est une matrice pourvue d'une pluralité de canaux de couleur,
o qui comporte également différents types d'éléments filtrants pour différents canaux de couleur
o et qui est également transmissible sur l'ensemble de ses différents canaux de couleur pour la lumière dans la gamme des infrarouges proches d'une longueur d'onde supérieure à 780 nm,
- l'image microscopique de fluorescence est une image couleur
- et le rayon laser (LS) a une longueur d'onde (WB) dans la gamme des infrarouges proches à partir de 780 nm.
